# EUROPÄISCHE PATENTSCHRIFT

(11) **EP 2 386 447 B1**
(45) Veröffentlichungstag und Bekanntmachung des Hinweises auf die Patenterteilung: **29.10.2014**
(21) Anmeldenummer: 11160102.7
(22) Anmeldetag: 29.03.2011
(51) Int. Cl.: B60Q 1/076

(54) **Kraftfahrzeugscheinwerfer**
Motor vehicle headlamp
Phare de véhicule automobile

(30) Priorität: 14.05.2010 DE 102010021002
(43) Veröffentlichungstag der Anmeldung: 16.11.2011
(73) Patentinhaber: Automotive Lighting Reutlingen GmbH, 72762 Reutlingen (DE)
(72) Erfinder: Brendle, Matthias, 72074 Tübingen (DE)
(74) Vertreter: DREISS Patentanwälte PartG mbB

(56) Entgegenhaltungen:
- EP-A1- 1 719 662
- EP-A1- 1 854 665
- EP-A1- 2 088 364
- WO-A2-02/069452
- DE-A1-102007 013 074
- DE-U1-202007 011 199
- DE-U1-202008 007 470
- US-A- 5 151 849

## Beschreibung

Die Erfindung betrifft einen Scheinwerfer, speziell für ein Kraftfahrzeug, nach dem Oberbegriff des Anspruchs 1 sowie ein Verfahren zur Justage des Scheinwerfers.

Scheinwerfer, insbesondere für ein Kraftfahrzeug, zur Erzeugung einer variablen Lichtverteilung sind bekannt. Hierzu ist üblicherweise ein Lichtmodul oder ein anderes Bauteil des Scheinwerfers, welches Einfluss auf die Richtung des ausgesandten Lichts hat, bewegbar gelagert. So ist bspw. zur Realisierung eines so genannten dynamischen Kurvenlichts das Lichtmodul bzw. ein anderes Bauteil des Scheinwerfers, um eine vertikale Achse horizontal schwenkbar gelagert.

Ein gattungsgemäßer Scheinwerfer ist bspw. aus der EP 1 854 665 A1 bekannt. Aus der DE 20 2008 007 470 U1 ist eine Verstelleinrichtung für einen Kraftfahrzeugscheinwerfer mit einer Sensorvorrichtung bekannt.

Um die Funktion des dynamischen Kurvenlichts korrekt auszuführen, muss die genaue Position des Lichtmoduls bzw. des beweglichen Bauteils zu jeder Zeit bekannt sein. Hierfür sind verschiedene Techniken bekannt: Einerseits kann eine Position des Lichtmoduls im Betrieb durch eine Sensorvorrichtung erfasst werden (Messen des Absolutwerts der aktuellen Position des Lichtmoduls). Hierbei erfolgt eine geregelte Variation der Position des Lichtmoduls bzw. des anderen Bauteils. Andererseits kann das Lichtmodul in einer Ausgangsposition justiert werden und mit einer exakt ansteuerbaren Antriebseinheit verbunden sein (Erfassen der aktuellen Position über den Auslenkwinkel bzgl. der Ausgangsposition), wobei die Position des Lichtmoduls gesteuert wird.

Bei Verwendung der Sensorvorrichtung (Absolutwertmessung) muss diese vor dem bestimmungsgemäßen Betrieb des Scheinwerfers justiert werden, um Herstellungstoleranzen der Bauteile sowie Montagetoleranzen des Scheinwerfers ausgleichen und eine Null-Lage (Geradeausstellung) des Lichtmoduls sowie einen zur Null-Lage korrespondierenden, idealen Arbeitspunkt der Sensorvorrichtung einhalten zu können.

Um die Justage der Sensorvorrichtung durchzuführen, kann beispielsweise ein am Bandende nach der Montage des Lichtmoduls ermittelter Korrekturwert der Sensorvorrichtung in einem digitalen Speicher abgelegt oder anderweitig eingestellt werden. Dies ist beispielsweise in der DE 10 2005 041 195 A1 beschrieben, wo der Korrekturwert durch eine Zerstörung von Kondensatoren eingestellt wird. Dieses Prinzip der Justage entspricht einer elektrischen Offset-Korrektur, d.h. einer elektrischen Justage.

Da die meisten Sensoren außerhalb ihres idealen Arbeitspunktes Signale liefern, die nicht mehr eine gewünschte Eigenschaft, wie beispielsweise einen hohen Gradienten, aufweisen, führt eine elektrische Justage zu einem qualitativ schlechten Messsignal.

Bei der Ermittlung der Auslenkung relativ zu einer definierten Ausgangsposition ist eine direkte Kopplung der Antriebseinheit mit dem schwenkbaren Lichtmodul erforderlich. Hierbei wird auf die Sensorvorrichtung verzichtet.

Ausgehend von dem beschriebenen Stand der Technik liegt der vorliegenden Erfindung die Aufgabe zugrunde, den Scheinwerfer derart auszugestalten und weiterzubilden, dass die Absolutwertmessung der Position des beweglichen Bauteils des Scheinwerfers exakt und mit möglichst geringem Aufwand realisiert werden kann.

Zur Lösung dieser Aufgabe wird ein Scheinwerfer mit den Merkmalen des Anspruchs 1 und ein Verfahren mit den Merkmalen des Anspruchs 6 vorgeschlagen.

Der erfindungsgemäße Scheinwerfer umfasst somit die Sensorvorrichtung, die eine Bewegungsposition gemäß einem Freiheitsgrad des beweglichen Bauteils erfasst. Die Auslenkung geschieht beispielsweise zwischen einem Schwenkrahmen, an dem das Lichtmodul befestigt ist und einem Halterahmen. Insbesondere ist denkbar, dass das Lichtmodul zur Realisierung einer dynamischen Kurvenlichtfunktion um eine vertikale Achse schwenkbar am Halterahmen gelagert ist. Der Halterahmen kann relativ zu einem Scheinwerfergehäuse fest oder ebenfalls beweglich (beispielsweise um die horizontale Achse schwenkbar zur Realisierung einer Leuchtweitenregelung) ausgebildet sein.

Die Sensorvorrichtung besteht aus zwei Sensorelementen. Eines ist dem Halterahmen, das andere dem Schwenkrahmen zugeordnet. Mindestens eines der Sensorelemente ist zur Justage an oder in dem zugeordneten Bauteil bewegbar und in einer Justage-Position festlegbar bzw. fixierbar.

Bezüglich der Materialeigenschaften und der Herstellung der einzelnen Bauteile sowie der Montage des Scheinwerfers können gewisse Toleranzen zugelassen werden, die durch die Justage wieder ausgeglichen werden. Beispielsweise kann eine unterschiedliche Lage eines Arbeitspunktes von verschiedenen Sensorvorrichtungen durch die Justage ausgeglichen werden.

Durch verringerte Anforderungen an die Toleranz sinken der Aufwand bezüglich Entwicklung und Fertigung und schlussendlich auch die Kosten bei gleichzeitiger Sicherstellung einer gleichbleibend hohen Verfügbarkeit und Zuverlässigkeit der Funktion des Scheinwerfers.

Das bewegliche Bauteil kann selbstverständlich außer einem Lichtmodul auch ein beliebig anderes Bauteil des Scheinwerfers sein. Beispiel hierfür ist eine Blendenanordnung (zur Variation der Position einer Hell-Dunkel-Grenze einer abgeblendeten Lichtverteilung oder zum Umschalten der Lichtverteilung zwischen Abendlicht und Fernlicht). Denkbar wäre auch ein bewegliches Bauteil in Form einer Projektionslinse, durch welche das reflektierte Licht zur Erzeugung der gewünschten Lichtverteilung vor das Fahrzeug auf die Fahrbahn projiziert wird. Durch Drehen der Linse um eine vertikale Achse oder durch Verschieben der Linse in horizontaler Richtung relativ zum übrigen Lichtmodul kann die Lichtverteilung in horizontaler Richtung variiert werden.

Das erste Sensorelement weist einen Freiheitsgrad bezüglich des zugeordneten beweglichen Bauteils oder bezüglich des zugeordneten feststehenden Bauteils auf. Des Weiteren stehen der Freiheitsgrad des beweglichen Bauteils und der Freiheitsgrad des ersten Sensorelements in einem linearen Zusammenhang. Damit kann das erste Sensorelement bezüglich des weiteren Sensorelements justiert und fixiert werden, wodurch Toleranzen ausgeglichen werden können. Das erste Sensorelement weist nach einer Fixierung bezüglich des zugeordneten beweglichen Bauteils oder bezüglich des feststehenden Bauteils keinen Freiheitsgrad mehr auf.

Eine das erste Sensorelement haltende Haltevorrichtung oder die Aufnahmevorrichtung weist Zähne auf. Die Zähne graben sich in eine entsprechend vorgesehene Vorrichtung ein und ermöglichen dadurch eine einfache und haltbare Fixierung des ersten Sensorelements. Die Zähne bestehen aus einem härteren Material als dem zur Befestigung zugeordneten Material. Dadurch können sich vorteilhaft die Zahnspitzen der Zähne in das weichere Material eingraben und es entsteht eine formschlüssige Verbindung. Dadurch entsteht bei der Einführung des Sensorelements in die Aufnahmevorrichtung eine teils elastische, teils plastische Verformung, die nachgehend in eine rein plastische Verformung übergeht. Dadurch wird auf einfache Weise eine formschlüssige Verbindung geschaffen.

In einer vorteilhaften Ausführungsform des Scheinwerfers ist das erste Sensorelement durch eine Aufnahmevorrichtung aufnehmbar. Die Aufnahmevorrichtung sorgt dafür, dass das erste Sensorelement nur einen Freiheitsgrad aufweist und bezüglich des zugeordneten beweglichen Bauteils oder bezüglich des feststehenden Bauteils fixierbar ist. Die Aufnahmevorrichtung bestimmt somit vorteilhaft, in welcher Weise eine Justierung und Fixierung des ersten Sensorelements möglich ist.

Eine vorteilhafte Weiterbildung des Scheinwerfers sieht vor, dass die Zahnbrust der Zähne senkrecht zu einer Einführrichtung steht, und dass der Zahnrücken der Zähne in die Einführrichtung orientiert ist. Dadurch wird ermöglicht, dass das erste Sensorelement auf einfache Weise beispielsweise in die Aufnahmevorrichtung eingeführt werden kann. Des Weiteren ermöglicht die Geometrie der Zähne, dass sich nach dem Erreichen einer Justage-Position die Zähne in eine entsprechend angebrachte Vorrichtung eingraben.

In einer vorteilhaften Weiterbildung des Scheinwerfers ist eine Entriegelungsvorrichtung vorgesehen, wobei die Entriegelungsvorrichtung zu einer Entfernung des ersten Sensorelements von dem zugeordneten beweglichen Bauteil oder von dem zugeordneten feststehenden Bauteil vorgesehen ist. Ein defektes ersten Sensorelement kann dadurch beispielsweise auf einfache Weise entfernt und durch ein neues Sensorelement ersetzt werden.

Eine vorteilhafte Weiterbildung des Scheinwerfers sieht vor, dass die Zähne einer Haltevorrichtung an Stegen angeordnet sind, dass ein Teilstück aus einem die Stege verbindenden Anschlusssteg der Haltevorrichtung heraustrennbar ist, und dass sich die aus dem Abschlusssteg entstehenden Endbereich zusammendrücken lassen, so dass die Zähne aus der Aufnahmevorrichtung entfernbar sind. Damit wird eine einfache Entriegelungsvorrichtung geschaffen, die gleichzeitig eine haltbare Fixierung des ersten Sensorelements an dem zugeordneten beweglichen Bauteil oder an dem zugeordneten feststehenden Bauteil ermöglicht.

Das Verfahren sieht in einer vorteilhaften Weiterbildung vor, dass die Lichtverteilung in horizontaler Richtung variabel ist und die Null-Lage einer Geradeausposition des Scheinwerfers entspricht. D.h., dass das Licht in Fahrtrichtung (auf gerader Fahrbahn) des Fahrzeugs ausgestrahlt wird. Dadurch wird erreicht, dass diese wichtige Bewegungsposition für den Scheinwerfer immer wieder sicher und exakt erreicht werden kann.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. In der Zeichnung zeigen:
- Figur 1a: ein Lichtmodul eines erfindungsgemäßen Scheinwerfers umfassend eine erste Form einer Sensorvorrichtung;
- Figur 1b-1d: die erste Form der Sensorvorrichtung in einem Ausschnitt aus Figur 1a;
- Figur 2a: ein Lichtmodul eines Scheinwerfers, der nicht Gegenstand der vorliegenden Erfindung ist, umfassend eine Sensorvorrichtung;
- Figur 2b-2c: die Sensorvorrichtung des Lichtmoduls aus Figur 2a in einem Ausschnitt;
- Figur 3a-3d: ein schematisches Modell der Sensorvorrichtung und der zugehörigen Bauteile eines erfindungsgemäßen Scheinwerfers;
- Figur 4: einen beispielhaften Spannungsverlauf eines Sensorsignals der Sensorvorrichtung eines erfindungsgemäßen Scheinwerfers;
- Figur 5a-5e: eine zweite Form der Sensorvorrichtung eines erfindungsgemäßen Scheinwerfers in einer Draufsicht;
- Figur 6a-6c: eine dritte Form der Sensorvorrichtung eines erfindungsgemäßen Scheinwerfers in einer Draufsicht;
- Figur 7a-7c: die dritte Form der Sensorvorrichtung in einer Schrägprojektion;
- Figur 8a-8c: eine Sensorvorrichtung eines Scheinwerfers, der nicht Gegenstand der vorliegenden Erfindung ist;
- Figur 9a-9b: eine Sensorvorrichtung eines Scheinwerfers, der nicht Gegenstand der vorliegenden Erfindung ist;
- Figur 10a-10b: eine Sensorvorrichtung eines Scheinwerfers, der nicht Gegenstand der vorliegenden Erfindung ist;
- Figur 11a-11b: eine Sensorvorrichtung eines Scheinwerfers, der nicht Gegenstand der vorliegenden Erfindung ist;
- Figur 12a-12c: eine Sensorvorrichtung eines Scheinwerfers, der nicht Gegenstand der vorliegenden Erfindung ist;
- Figur 13a-13c: eine Sensorvorrichtung eines Scheinwerfers, der nicht Gegenstand der vorliegenden Erfindung ist; und
- Figur 14a-14b: eine Sensorvorrichtung eines Scheinwerfers, der nicht Gegenstand der vorliegenden Erfindung ist.

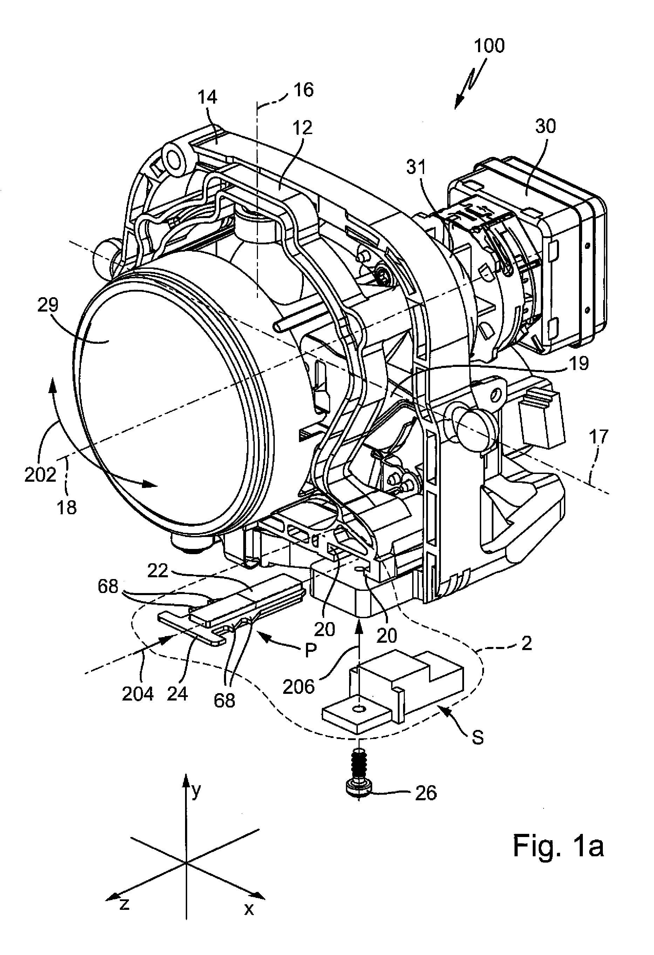

Figur 1a zeigt ein Lichtmodul 100 eines erfindungsgemäßen Scheinwerfers umfassend eine erste Form einer Sensorvorrichtung 2. Das Lichtmodul 100 kann alleine oder zusammen mit weiteren Lichtmodulen in einem Gehäuse des Scheinwerfers angeordnet sein. Die Sensorvorrichtung 2 wird bei Scheinwerfern, speziell für ein Kraftfahrzeug, eingesetzt, um die relative Position eines beweglichen Bauteils gegenüber einem feststehenden Bauteil zu bestimmen.

Das Lichtmodul 100 ist als ein Projektionsmodul umfassend eine Blendenanordnung 19 und die Projektionslinse 29 ausgebildet. Des Weiteren umfasst das Lichtmodul 100 eine Lichtquelle 30, die in dem dargestellten Ausführungsbeispiel als eine Gasentladungslampe ausgebildet ist und von der in der Figur lediglich ein an der Rückseite der Lichtquelle 30 angeordnetes Zündgerät zu erkennen ist. Außerdem umfasst das Lichtmodul 100 einen Reflektor 31, von dem in der Figur lediglich ein Reflektorhals zu erkennen ist, an dem die Lichtquelle 30 lösbar befestigt ist. In einem Glaskolben der Lichtquelle 30 wird ein Lichtbogen erzeugt und aufrechterhalten. Der Glaskolben ist über eine rückseitige Öffnung in das Innere des Reflektors 31 eingeführt. Von dem Lichtbogen ausgesandtes Licht wird von einer Reflexionsfläche des Reflektors 31 reflektiert und gebündelt. Das reflektierte Licht wird zur Erzeugung einer gewünschten Lichtverteilung durch die Projektionslinse 29 auf die Fahrbahn vor das Fahrzeug projiziert. Die Blendenanordnung 19 schattet einen Teil des reflektierten Lichts ab, so dass die Lichtverteilung kaum Licht oberhalb einer weitgehend horizontalen Hell-Dunkel-Grenze umfasst. Eine weitgehend horizontale Hell-Dunkel-Grenze umfasst insbesondere eine asymmetrische Hell-Dunkel-Grenze mit einem niedrigeren Abschnitt auf der Gegenverkehrsseite, einem höheren Abschnitt auf der eigenen Verkehrsseite und einem stufenförmigen oder schrägen Übergang zwischen den beiden Abschnitten. Zur Erzeugung der Hell-Dunkel-Grenze bildet die Projektionslinse 29 eine Oberkante der Blendenanordnung 19 auf der Fahrbahn ab.

Zum Umschalten der Lichtverteilung zwischen einer abgeblendeten Lichtverteilung, beispielsweise Abendlicht, und einer anderen Lichtverteilung, beispielsweise Fernlicht, kann die Blendenanordnung 19 um eine quer und beabstandet zu einer optischen Achse 18 des Lichtmoduls 100 verlaufende horizontale Achse verschwenkt werden. Zur Realisierung eines dynamischen Kurvenlichts wäre es denkbar statt des gesamten Lichtmoduls 100 lediglich die Projektionslinse 29 horizontal zu verschwenken. Ein bewegliches Teil dessen relative Position durch die Sensoreinrichtung 2 zu erfassen ist, kann beispielsweise die Blendenanordnung 19 oder die Projektionslinse 29 sein. In einer anderen Ausführungsform kann das Lichtmodul 100 auch als ein Reflexionsmodul ausgebildet sein, das üblicherweise über keine Blende und Linse verfügt. Alternativ kann das Lichtmodul 100 auch eine Halbleiterlichtquellen umfassende Lichtquelle aufweisen. Das von diesen erzeugte Licht kann mittels Projektion und/oder Reflexion die gewünschte Lichtverteilung erzeugen.

Das Lichtmodul 100 umfasst einen Schwenkrahmen 12 und einen Halterahmen 14. Der Schwenkrahmen 12 wird allgemein als bewegliches Bauteil, der Halterahmen 14 allgemein als feststehendes Bauteil bezeichnet. Das Lichtmodul 100 und der Halterahmen 14 sind fest miteinander verbunden. Der Schwenkrahmen 12 ist derart mit dem Halterahmen 14 verbunden, so dass sich für den Schwenkrahmen 12 ein Rotations-Freiheitsgrad bezüglich des Halterahmens 14 gemäß eines Doppelpfeils 202 ergibt. Mit diesem Rotations-Freiheitsgrad des Schwenkrahmens 12 lässt sich eine dynamische Kurvenlichtfunktion mit einer vertikalen Schwenkachse 16 realisieren.

Unter "Freiheitsgrad" wird eine Möglichkeit einer Bewegung eines Bauteils oder Sensorelements verstanden, wobei hierunter ein Translations-Freiheitsgrad und/oder ein Rotations-Freiheitsgrad verstanden werden kann. Weitergehend kann unter einem Freiheitsgrad auch die Möglichkeit der Bewegung in nur eine Richtung verstanden werden.

Der Halterahmen 14 ist fest mit dem Gehäuse des Scheinwerfers verbunden und/oder um eine weitere Achse schwenkbar, beispielsweise um eine horizontale Achse 17 zur Realisierung einer Leuchtweitenregelung.

Die Sensorvorrichtung 2 besteht aus einem Sensorelement P und einem Sensorelement S. Das Sensorelement S ist dem Halterahmen 14 zugeordnet und wird mittels einer Schraube 26 gemäß einem Pfeil 206 an dem Halterahmen 14 befestigt. Das Sensorelement S besitzt somit gegenüber dem Halterahmen 14 keinen Freiheitsgrad. Das Sensorelement S ist als ein Hall-Sensor ausgeführt. Bei einer notwendigen Anbringung eines Kabels zu einer Signalübertragung ist das Kabel bevorzugt an das Sensorelement S angebracht.

Das Sensorelement P besteht aus einem Dauermagneten 22 und einer Haltevorrichtung 24. Die Haltevorrichtung 24 ist als Blech ausgebildet. Des Weiteren besitzt die Haltevorrichtung 24 seitlich Zähne 68. Das Sensorelement P ist dazu vorgesehen, in eine an dem Schwenkrahmen 12 ausgebildete Tasche 20, die allgemein als Aufnahmevorrichtung bezeichnet wird, in einer Einführrichtung entsprechend einem Pfeil 204 eingeführt und in der Tasche 20 fixiert zu werden. Nach der Fixierung des Sensorelements P weist das Sensorelement P keinen Freiheitsgrad mehr bezüglich des Schwenkrahmens 12 auf. Vor der Fixierung des Sensorelements P lässt sich das Sensorelement P tangential zu einer Kreisbahn des Schwenkrahmens 12 bewegen. Demnach entspricht der Freiheitsgrad vor Fixierung des Sensorelements P einem Translations-Freiheitsgrad des Sensorelements P.

Bei einem Einführen des Sensorelements P in die Tasche 20 fungieren die Zähne 68 als Widerhaken und die Zähne 68 graben sich in die Tasche 20 ein, um das Sensorelement P an dem Schwenkrahmen 12 zu befestigen. Die Einführrichtung gemäß des Pfeils 204 entspricht damit einem Translations-Freiheitsgrad des Sensorelements P bezüglich des Schwenkrahmens 12. Die Zähne 68 der Haltevorrichtung 24 in Verbindung mit der Tasche 20 werden allgemein als Tannenbaum-Einpressverbindung bezeichnet.

Das Sensorelement S erzeugt abhängig von der relativen Position des Sensorelements P zu dem Sensorelement S ein Sensorsignal. Damit ist das Sensorsignal abhängig von der Winkelstellung zwischen dem Schwenkrahmen 12 und dem Halterahmen 14.

Um das Sensorelement P bezüglich des Sensorelements S zu justieren, wird der Schwenkrahmen 12 gemeinsam mit dem Lichtmodul 100 in einem ersten Justage-Schritt in eine Null-Lage gebracht. Die Null-Lage entspricht üblicherweise einer Geradeausstellung des Lichtmoduls 10. Die Geradeausstellung ist die Stellung des Lichtmoduls 10, wie sie bei Fahrzeugen ohne eine dynamische Kurvenlichtfunktion vorliegt.

Darauffolgend wird in einem zweiten Justage-Schritt das Sensorelement P in die Tasche 20 eingeführt. Das Sensorelement P wird gemäß dem Pfeil 204 soweit in die Tasche 20 eingeführt, bis sich ein vorbestimmter Wert für ein von dem Sensorelement S erzeugten Sensorsignal einstellt.

In einem dritten Justage-Schritt fixiert sich das Sensorelement P in der Tasche 20 durch eine Beendigung der Einschubbewegung von selbst durch das Eingreifen der Zähne 68 in die Tasche 20. Dies entspricht einem Erreichen einer Justage-Position in der Tasche 20. Unter der Justage-Position wird allgemein eine gewünschte Position eines der Sensorelements P oder S bezüglich des zugeordneten Bauteils verstanden, wobei in der gewünschten Position im Wesentlichen ein vorbestimmter Wert des gemessenen Sensorsignals einhergeht.

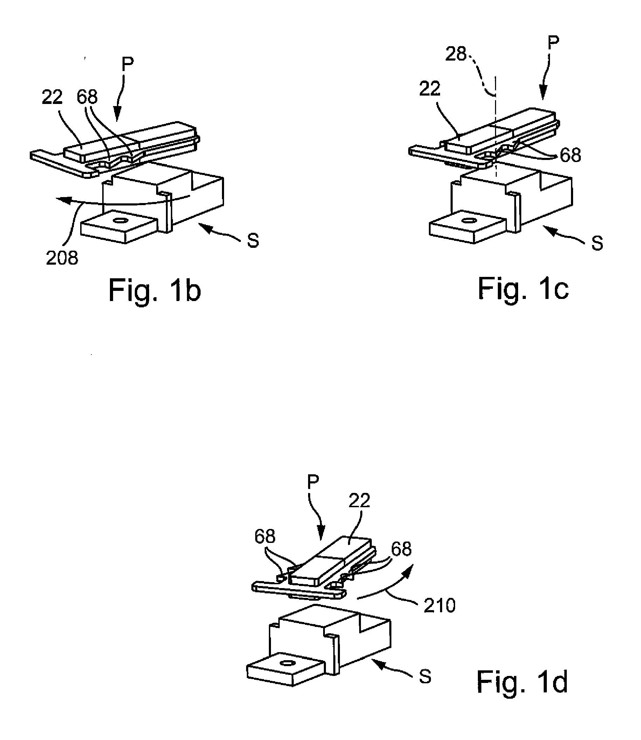

Die Figuren 1b bis 1d zeigen die erste Form der Sensorvorrichtung 2 in einem Ausschnitt aus Figur 1a. In den Ausschnitten sind verschiedene Schwenkpositionen des Lichtmoduls 100 um die Achse 16 zu sehen. Das Sensorelement P ist bezüglich des hier nicht gezeigten Schwenkrahmens 12 fixiert und besitzt somit keinen Freiheitsgrad bezüglich des Schwenkrahmens 12. Die gezeigten Positionen in den Figuren 1b bis 1d beziehen sich somit auf den Rotations-Freiheitsgrad des Schwenkrahmens 12.

In Figur 1b sind die Positionsgeber P und S in einer maximalen Auslenkung des Lichtmoduls 100 nach rechts gemäß eines Pfeils 208 gezeigt. Die Richtungsangabe bezieht sich hierbei auf eine Blickrichtung in positiver z-Richtung.

In der Figur 1c sind die Sensorelemente P und S in einer Null-Lage des Schwenkrahmens 12 relativ zum Halterahmen 14 gezeigt. Gemäß einer Achse 28 liegt der Dauermagnet zentriert über dem in dem Sensorelement S angeordneten Hall-Sensor.

In Figur 1d sind die Sensorelemente P und S in einer maximalen Auslenkung des Lichtmoduls 100 nach links gemäß eines Pfeils 210 gezeigt.

Gemäß der Figuren 1b bis 1d bewegt sich das Sensorelement P bei Auslenkung des Lichtmoduls 100 bzw. des Schwenkrahmens 12 entlang einer Kreisbahn, die dem Rotations-Freiheitsgrad des Schwenkrahmens 12 entspricht. Zu einer Justierung der Sensorvorrichtung 2 besitzt das Sensorelement P bezüglich des Schwenkrahmens 12 einen Translations-Freiheitsgrad, welcher stets tangential zu der Kreisbahn verläuft.

Gemäß der ersten Form der Sensorvorrichtung 2 besteht zwischen dem Sensorelement P und der Tasche 20 eine formschlüssige Verbindung, da sich die Zähne 68 in das Material der Tasche 20 eingraben. Die Zähne 68 sind hierzu üblicherweise aus härterem Material gefertigt als die Tasche 20. Eine kraftschlüssige Verbindung dagegen kann durch eine Längspresspassung, eine Querpresspassung, eine Klemmschraube, allgemein als Klemmmittel bezeichnet, oder auf beliebig andere Weise erzielt werden.

Anstatt der beschriebenen Tasche 20 sind auch andere Ausführungsformen der Aufnahmevorrichtung denkbar. Beispiele hierfür sind eine Prismenführung oder eine Linearführung. Diese bieten eine formschlüssige Führung eines Sensorelements P oder S und lassen damit nur einen Freiheitsgrad für das Sensorelement P oder S zu. Des Weiteren muss die Aufnahmevorrichtung derart ausgeführt sein, dass eine Reduktion der Freiheitsgrade des Sensorelements P oder S auf keinen Freiheitsgrad möglich ist.

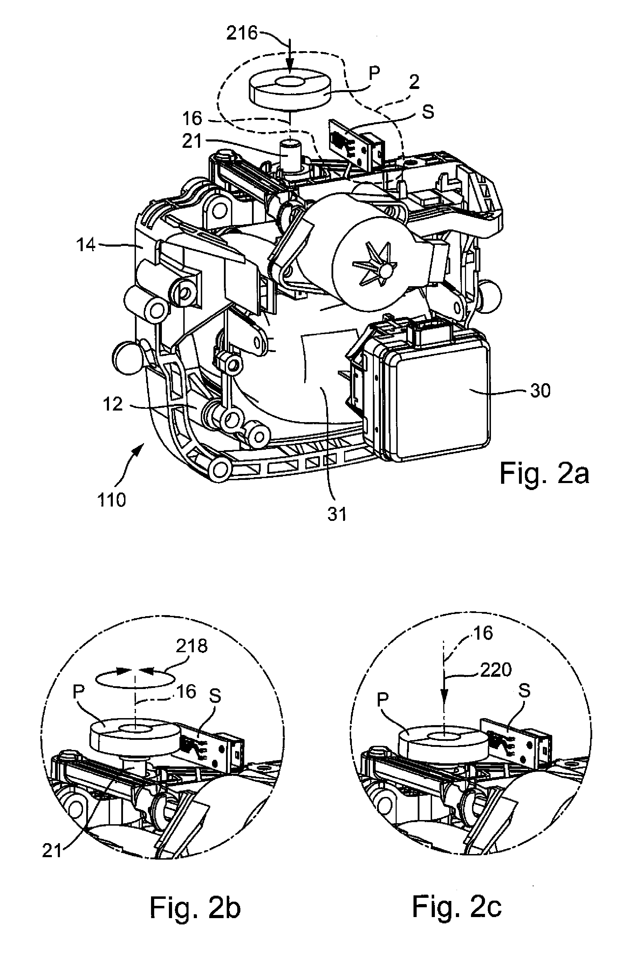

Figur 2a zeigt ein Lichtmodul 110 eines Scheinwerfers, der nicht Gegenstand der vorliegenden Erfindung ist, umfassend eine Sensorvorrichtung 2. Das Lichtmodul 110 umfasst einen Halterahmen 14 und einen Schwenkrahmen 12. Der Schwenkrahmen 12 ist um eine vertikale Schwenkachse 16 bezüglich des Halterahmens 14 verdrehbar, besitzt also einen Rotations-Freiheitsgrad. Die Anbringung eines Sensorelements P ist an einem Zapfen 21 vorgesehen. Das Sensorelement P weist hierfür eine entsprechende Aussparung auf. Der Zapfen 21 verläuft entlang der vertikalen Schwenkachse 16 und ist fest mit dem Schwenkrahmen 12 verbunden. Der Zapfen 21 wird allgemein als Aufnahmevorrichtung bezeichnet. Das Sensorelement P ist als permanenter Ringmagnet ausgeführt. Der Zapfen 21 ist an dem zur Aufnahme des Sensorelements P vorgesehenen Bereich im Wesentlichen zylinderförmig ausgebildet. Seitlich zu der vorgesehenen Position des Sensorelements P ist ein Sensorelement S angeordnet. Das Sensorelement S ist fest mit dem Halterahmen 14 verbunden.

Gemäß einem Pfeil 216 wird das Sensorelement P auf der vertikalen Schwenkachse 16 derart positioniert, dass das Sensorelement P durch den Zapfen 21 aufgenommen werden kann.

Figur 2b zeigt in einem Ausschnitt aus Figur 2a den zweiten Justage-Schritt zur Justierung der Sensorvorrichtung 2. Der Schwenkrahmen 12 ist in eine Null-Lage gebracht. Zur Justierung kann das Sensorelement P gemäß eines Doppelpfeils 218 um die Schwenkachse 16 gedreht werden. Die Drehung in einer Richtung des Pfeils 218 entspricht einem Rotations-Freiheitsgrad des Sensorelements P bezüglich des Schwenkrahmens 12.

Figur 2c zeigt in einem Ausschnitt aus Figur 2a, wie das Sensorelement P gemäß eines Pfeils 220 bezüglich des Schwenkrahmens fixiert wird. Die feste Verbindung zwischen dem Sensorelement P und dem Schwenkrahmen 12 wird durch eine Presspassung zwischen dem Sensorelement P und dem Zapfen 21 hergestellt. Die Presspassung kann durch eine Rändelung einer Kontaktfläche zwischen dem Sensorelement P und dem Zapfen 21 ergänzt werden. Bei der Presspassung wirken Kräfte zur Fixierung in radialer Richtung. Diese Kräfte in radialer Richtung verhindern durch Haftreibung, dass sich das Sensorelement P relativ zu den Zapfen 21 bewegt. Die Presspassung stellt üblicherweise eine kraftschlüssige Verbindung dar.

Als Presspassung kann eine Längspresspassung vorgesehen sein, die ein Aufpressen des Sensorelements P auf den Zapfen 21 unter hohem Kraftaufwand vorsieht. Alternativ ist auch eine Querpresspassung möglich, wobei das Sensorelement P erwärmt wird, damit sich der Innenumfang der Aussparung zur Aufnahme ausdehnt. Alternativ oder zusätzlich kann der Zapfen 21 gekühlt werden, so dass sich dessen Außenumfang verringert. Die Querpresspassung entsteht dann nach der Aufnahme des Sensorelements P durch den Zapfen 21 durch einen Temperaturausgleich und ein Ausdehnen bzw. Schrumpfen der entsprechenden beteiligten Bauteile in einem Bereich der Kontaktflächen zwischen dem Sensorelement P und dem Zapfen 21.

Weitergehend ist auch eine mehrteilige Ausführung des Sensorelements P möglich, beispielsweise in Form einer Kupplungshülse (nicht dargestellt) innerhalb des Ringmagneten des Sensorelements P. Die Kupplungshülse wird allgemein als Haltevorrichtung bezeichnet. Zu einer Verbindung der Kupplungshülse mit dem Zapfen 21 kann die Kupplungshülse verformt, beispielsweise gecrimpt oder gebördelt, oder geschweißt, werden. Bei einem Umbördeln ergibt sich ein Formschluss zwischen dem Sensorelement P und dem Zapfen 21. Hier ist auch die Befestigung mittels einer Klemmschraube möglich. Zu einer Justierung kann das Sensorelement P bzw. eine verbundene Kupplungshülse bzw. eine anders geartete Haltevorrichtung drehbar auf dem Zapfen 21 gelagert sein. Die Fixierung des Sensorelements P findet durch ein Verschweißen mit dem Zapfen 21 statt. Zu der Verschweißung kann Kunststoff oder ein Metall vorgesehen sein.

Es ist auch denkbar, dass der Zapfen 21 unterschiedliche Durchmesser aufweist. Auf einem kleinen Durchmesser des Zapfens 21 ist das Sensorelement P bzw. die entsprechende Haltevorrichtung mit einer Spielpassung gelagert. Durch die Spielpassung kann das Sensorelement P justiert werden. Durch ein Aufpressen auf den großen Durchmesser des Zapfens 21 entsteht dann eine Presspassung und das Sensorelement P wird fixiert. Der große Durchmesser des Zapfens 21 kann als Rändel ausgeführt sein.

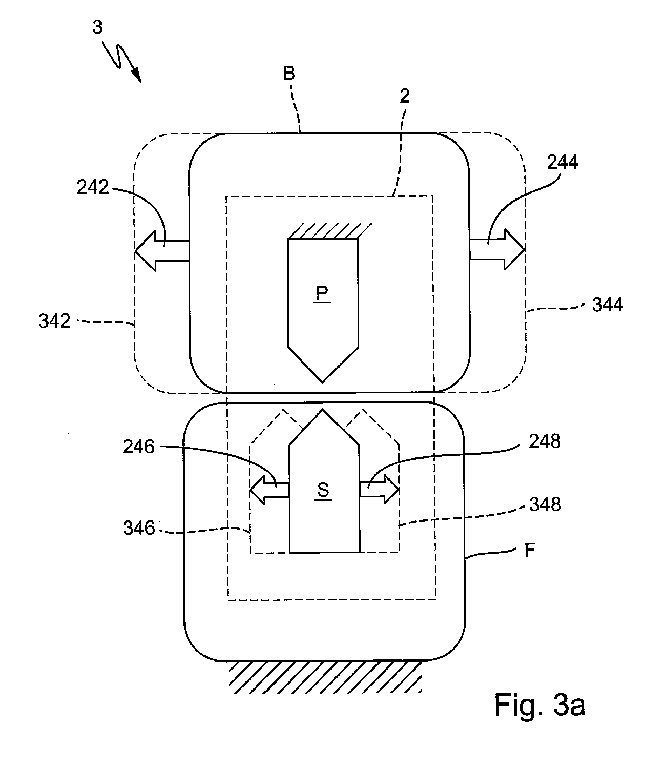

Figuren 3a bis 3d zeigen ein schematisches Modell 3 der Sensorvorrichtung 2 und der zugehörigen Bauteile, einem feststehenden Bauteil F und einem beweglichen Bauteil B.

Das Modell 3 in Figur 3a zeigt den nicht justierten Zustand. Im Gegensatz zu den vorstehend erläuterten Figuren 1 und 2 ist ein Sensorelement P fest an dem beweglichen Bauteil D angeordnet und das Sensorelement S bewegbar, aber fixierbar dem feststehenden Bauteil F zugeordnet. Wie in Figur 1 gezeigt, kann auch das Sensorelement S fixiert und das Sensorelement P bewegbar, justierbar und fixierbar sein.

Das bewegliche Bauteil B ist entsprechend Pfeilen 242 und 244 und jeweils entsprechenden Markierungen 342 und 344 relativ zu dem feststehenden Bauteil F bewegbar. Eine Bewegung gemäß den Pfeilen 242 oder 244 entspricht damit einem Freiheitsgrad des beweglichen Bauteils B bezüglich des feststehenden Bauteils F. Dieser Freiheitsgrad kann ein Translations-Freiheitsgrad oder ein Rotations-Freiheitsgrad sein. Bewegungen gemäß Pfeilen 246 und 248 und der jeweiligen Markierungen 346 und 348 entsprechen einem Freiheitsgrad des Sensorelements S bezüglich des feststehenden Bauteils F.

Somit weist das schematische Modell 3 der Figur 3a zwei Freiheitsgrade auf. Zwischen diesen Freiheitsgraden besteht eine lineare Abhängigkeit. Die lineare Abhängigkeit in diesem Zusammenhang bedeutet, dass zwei Bewegungsvektoren, die jeweils einem der Freiheitsgrade zugeordnet sind und deren Betrag jeweils ungleich Null ist, linear abhängig sind. Nach einer Justage des Sensorelements S ist das Sensorelement S bezüglich des feststehenden Bauteils F fixierbar.

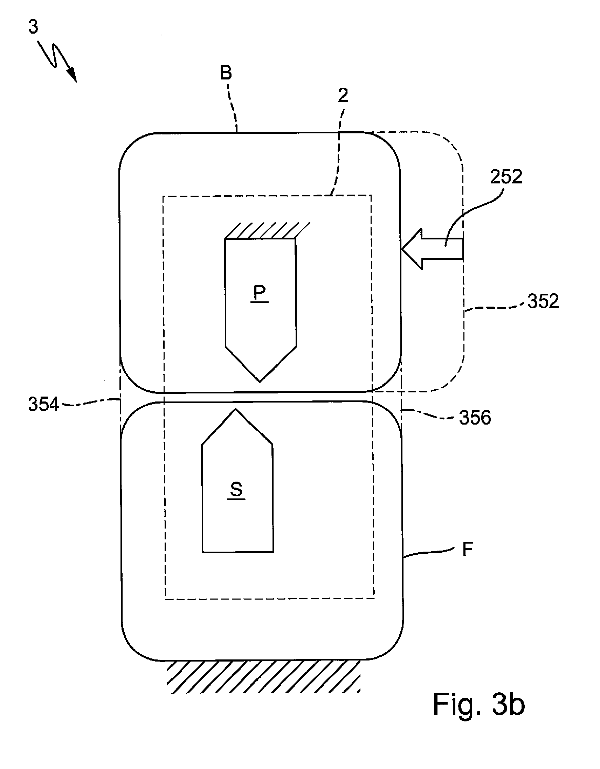

Figur 3b zeigt das schematische Modell 3 der Sensorvorrichtung 2 und der zugehörigen Bauteile in dem ersten Justage-Schritt. Der erste Justage-Schritt besteht darin, dass bewegliche Bauteil B in eine Null-Lage zu bringen. Die Null-Lage ist eine Lage des beweglichen Bauteils B und des feststehenden Bauteils F zueinander, wobei die Null-Lage schematisch durch Linien 354 und 356 gekennzeichnet ist. Zum Erreichen der Null-Lage wird das bewegliche Bauteil B gemäß eines Pfeils 252 aus einer durch die Berandung 352 gekennzeichneten Lage in die Null-Lage gebracht und vorübergehend fixiert. Figur 3b ist demnach auch so zu verstehen, dass eine geometrische Übereinstimmung der Positionen von bewegbarem Bauteil B und feststehendem Bauteil F nicht mit der Null-Lage übereinstimmen muss.

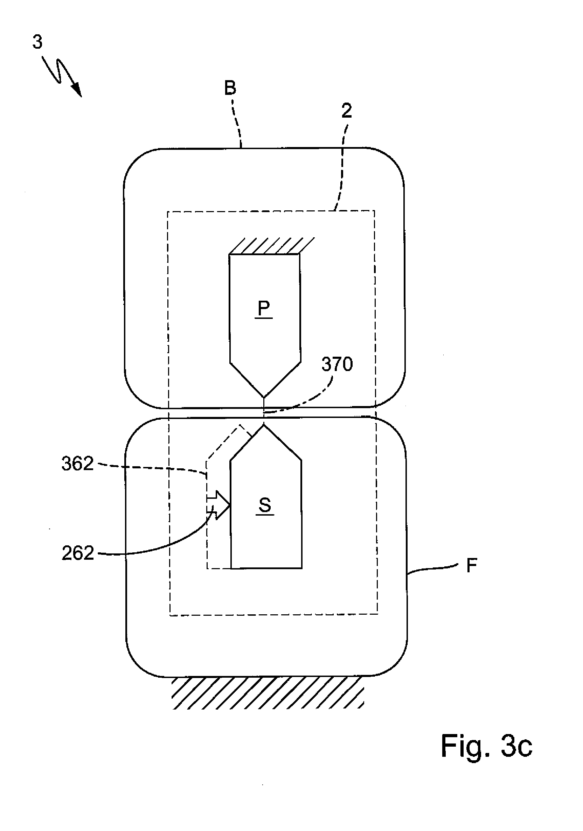

Figur 3c zeigt das schematische Modell 3 der Sensorvorrichtung 2 und der zugehörigen Bauteile in dem zweiten Justage-Schritt. In dem zweiten Justage-Schritt wird das Sensorelement S gemäß eines Pfeils 263 aus einer durch die Berandung 362 gekennzeichneten Lage in eine Justage-Lage gebracht. Die Justage-Lage des Sensorelements S ist schematisch durch eine Linie 370 zwischen den Sensorelementen P und S gekennzeichnet. Die Justage-Lage des Sensorelements S zeichnet sich dadurch aus, dass ein Sensorsignal von der Sensorvorrichtung 2 erzeugt wird. Das Sensorsignal stimmt hierbei mit einem vorbestimmten Wert im Wesentlichen überein. Figur 3c ist demnach auch so zu verstehen, dass eine geometrische Übereinstimmung der Position der Sensorelemente P und S nicht gegeben sein muss.

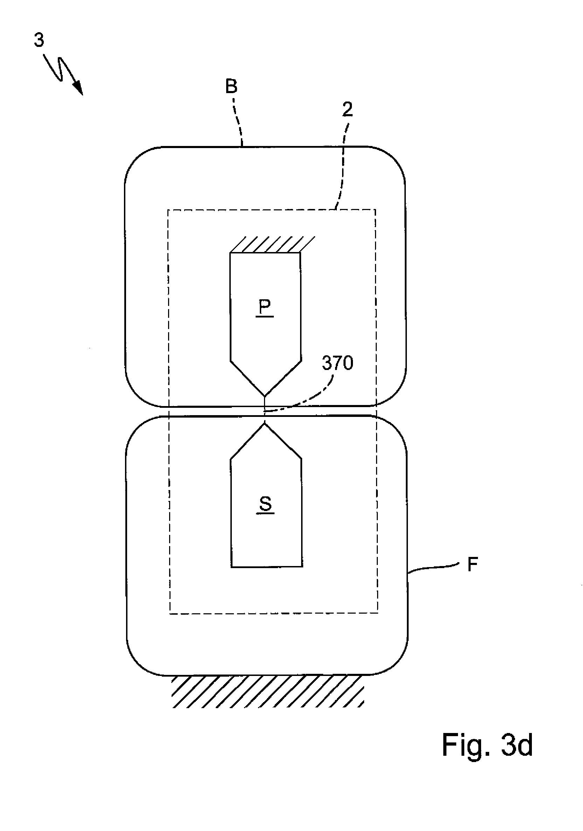

Figur 3d zeigt das schematische Modell der Sensorvorrichtung 2 und der zugehörigen Bauteile in dem dritten Justage-Schritt. Der dritte Justage-Schritt zeichnet sich dadurch aus, dass das Sensorelement S in der im zweiten Justage-Schritt erreichten Justage-Lage bezüglich des feststehenden Bauteils F fixiert wird. Nach dem dritten Justage-Schritt befindet sich das schematische Modell der Sensorvorrichtung 2 und der zugehörigen Bauteile in einem justierten Zustand. In dem justierten Zustand besitzt das schematische Modell der Sensorvorrichtung 2 und der zugehörigen Bauteile nur noch den Freiheitsgrad des beweglichen Bauteils B bezüglich des feststehenden Bauteils F.

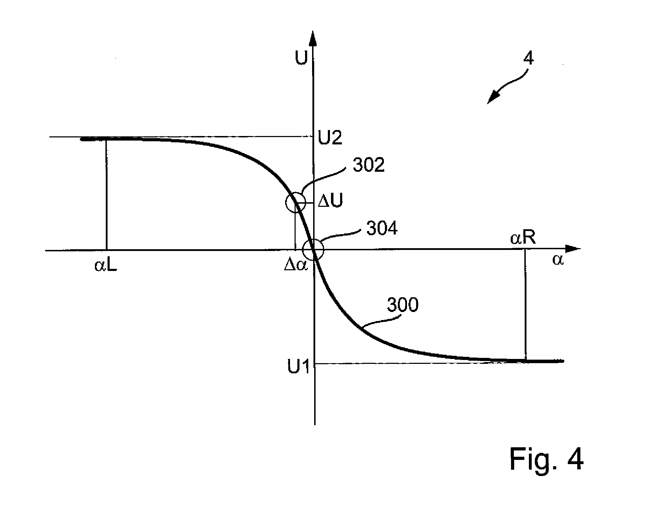

Figur 4 zeigt einen beispielhaften Spannungsverlauf 300 eines Sensorsignals 4. Das Sensorsignal 4 wird von dem Sensorelement S oder dem Sensorelement P erzeugt. Der Spannungsverlauf 300 wird allgemein auch als Sensorkennlinie bezeichnet. In der Figur 4 sind eine Spannung U über einem Winkel α aufgetragen. Bezüglich der Figuren 1 und 2 stellt der Winkel α eine Winkelstellung zwischen dem Schwenkrahmen 12 mit dem Lichtmodul 100 bzw. 110 und dem Halterahmen 14 dar. Für positive Winkel α steht eine Drehung entgegen dem Uhrzeigersinn, d.h. nach links in Richtung des Pfeils 210 in Figur 1d. Für negative α steht eine Drehung im Uhrzeigersinn, d.h. nach rechts in Richtung des Pfeils 208 in Figur 1b. Ein Spannungswert U1 und ein Spannungswert U2 sind Grenzwerte für den Spannungsverlauf 300, die der maximalen Auslenkung des Schwenkrahmens 12 bzw. des Lichtmoduls 100 relativ zum Halterahmen 14 entsprechen.

Ausgehend von positiven Werten für den Spannungsverlauf 300 nahe U2 strebt der Spannungsverlauf 300 einem idealen Arbeitspunkt 304 zu. Der ideale Arbeitspunkt 304 stimmt mit dem zu Figur 3c erläuterten vorbestimmten Wert im Wesentlichen überein. Der ideale Arbeitspunkt wird allgemein als vorbestimmtes Spannungssignal oder vorbestimmtes Sensorsignal bezeichnet. Der ideale Arbeitspunkt 304 liegt üblicherweise in einem Nulldurchgang des Spannungsverlauf 300 und in einem Bereich des Spannungsverlaufs, der einen hohen Differenzenquotienten aufweist. Weitergehend strebt der Spannungsverlauf 300 für positive Winkel α gegen eine Spannung nahe dem Spannungswert U1. Der Spannungsverlauf 300 ist im Wesentlichen punktsymmetrisch zu dem idealen Arbeitspunkt 304.

Stimmt der ideale Arbeitspunkt 304 mit der Null-Lage des Schwenkrahmens 12 überein, so ergibt sich für die maximale Auslenkung des Schwenkrahmens 12 nach rechts gemäß Figur 1b ein Winkelwert αR. Für die maximale Auslenkung des Schwenkrahmens 12 nach links gemäß Figur 1d ergibt sich ein Winkelwert αL. Die beiden Winkelwerte αR und αL besitzen in etwa die gleiche Distanz zu dem idealen Arbeitspunkt 304.

In der Null-Lage kann sich ein nicht-idealer Arbeitspunkt 302 ergeben. Der nicht-ideale Arbeitspunkt 302 kann bedingt sein durch Toleranzen, wie beispielsweise den Einbau oder die Beschaffenheit der Sensorelemente P und S betreffen. Der nicht-ideale Arbeitspunkt 302 ist durch einen Spannungswert ΔU und einen Winkel Δα bestimmt. Um nun einen Winkel bezüglich der Null-Lage mit dem nicht-idealen Arbeitspunkt 302 zu ermitteln, kann der Spannungswert ΔU, der in der Null-Lage von dem Sensorelement S erzeugt wird, berücksichtigt werden.

Bei der vorliegenden Erfindung wird die Sensorvorrichtung 2 jedoch derart justiert, so dass der ideale Arbeitspunkt 304 mit der Null-Lage des Schwenkrahmens 12 bzw. des Lichtmoduls 100 oder 110 übereinstimmt. Gemäß der Figur 3 werden zu der Justierung der Sensorvorrichtung 2 drei Justier-Schritte durchgeführt.

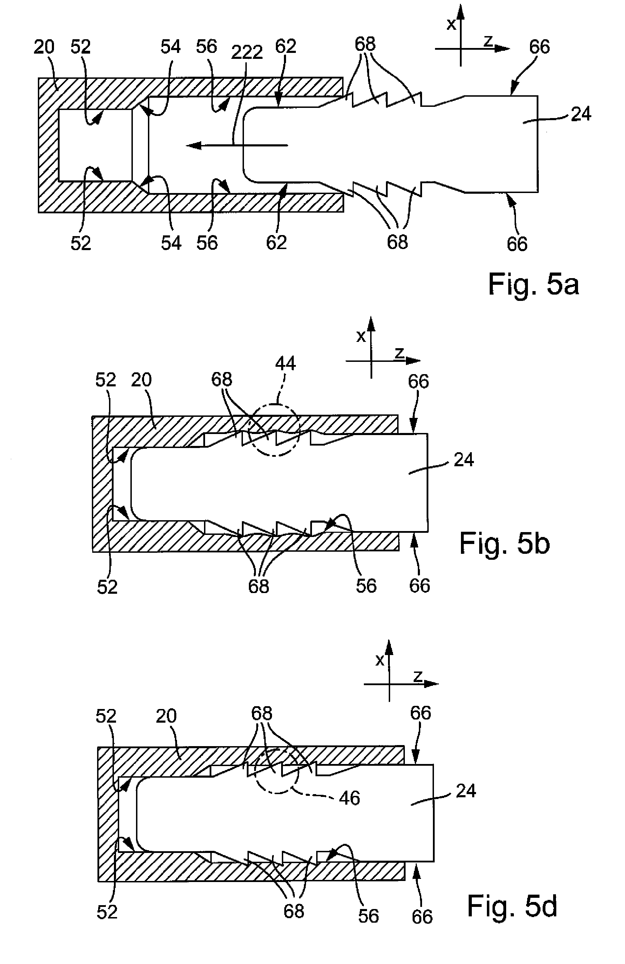

Figuren 5a bis 5e zeigen eine zweite Form der Sensorvorrichtung in einer Draufsicht, wobei die Sensorvorrichtung analog zu Figuren 1a bis 1d eine Tannenbaum-Einpressverbindung umfasst.

Figur 5a zeigt eine Tasche 20 und eine Haltevorrichtung 24. In einer Richtung eines Pfeils 222 wird die Haltevorrichtung 24 in die Tasche 20 eingeführt. Die Haltevorrichtung 24 ist Teil eines Sensorelements P oder S.

Die Tasche 20 weist innere Seitenwände 52 und 54 auf, wobei die inneren Seitenwände 56 weiter voneinander beabstandet sind als die inneren Seitenwände 52, die in Richtung des Pfeils 222 ausgebildet sind. Zwischen den inneren Seitenwänden 52 und 56 befindet sich ein Durchmessersprung 54. Die Tasche 20 ist bevorzugt aus einem Thermoplast hergestellt.

Die Haltevorrichtung 24 umfasst längs- und beidseitig äußere Seitenwände 62 und 66 mit dazwischen angeordneten Zähnen 68. Die äußeren Seitenwände 66 sind in der x-Richtung weiter voneinander beabstandet als die äußeren Seitenwände 62. Die Zahnspitzen der Zähne 68 sind in der x-Richtung weiter voneinander beabstandet als die äußeren Seitenwände 66.

Die inneren Seitenwände 52 der Tasche 20 dienen zur Aufnahme der Haltevorrichtung 24 im Bereich der äußeren Seitenwände 62. Durch die inneren Seitenwände 52 der Tasche 20 entsteht eine formschlüssige Verbindung mit der Haltevorrichtung 24 im Bereich der äußeren Seitenwände 62 in der x-Richtung. Die inneren Seitenwände 56 der Tasche 20 dienen zur Aufnahme der Haltevorrichtung 24 im Bereich der äußeren Seitenwände 66. Die inneren Seitenwände 56 der Tasche 20 dienen weiterhin zu Aufnahme der Zähne 68 der Haltevorrichtung 24.

Figur 5b zeigt die zweite Form der Sensorvorrichtung 2 in einer Draufsicht, wobei die Haltevorrichtung 24 in die Tasche 20 eingepresst wird. Hierbei tritt eine teils plastische, teils elastische Verformung der Tasche 20 im Bereich der inneren Seitenwände 56 auf. In der x-Richtung beschränken die inneren Seitenwände 52 und die inneren Seitenwände 56 die Bewegung der Haltevorrichtung 24. Des Weiteren ist ein Ausschnitt 44 markiert.

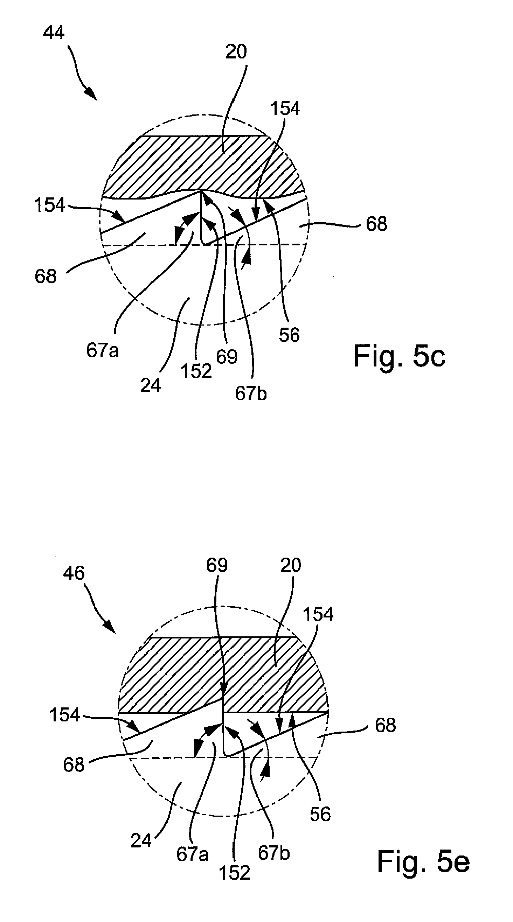

Figur 5c zeigt den Ausschnitt 44 aus Figur 5b. Es ist die teils plastische, teils elastische Verformung der äußeren Seitenwände 56 der Tasche 20 gezeigt. Ein Zahnrücken 154 der Zähne 68 ist in Richtung des Pfeils 222 aus Figur 5a orientiert. Eine Zahnbrust 152 ist entgegen des Pfeils 222 der Figur 5a orientiert. Ein Winkel 67a der Zähne 68 ist begrenzt mit einer parallelen zur z-Achse aus Figur 5b und ist in etwa 90°. Ein Winkel 67b der Zähne 68 ist ebenfalls mit einer parallelen zur z-Achse begrenzt und ist kleiner als der Winkel 67a. Dies ermöglicht den Einschub der Haltevorrichtung 24 in die Tasche 20, da eine Zahnspitze 69 zunächst die teils elastische, teils plastische Verformung der Tasche 20 bewirkt. Des Weiteren ist so gewährleistet, dass sich die Zähne 68 nachgehend im Bereich der inneren Seitenwände 56 in die Tasche 20 eingraben. Die Zahnspitze 69 weist einen Radius kleiner 0,1 mm auf. Damit wird gewährleistet, dass sich die Zähne 68 im Bereich der inneren Seitenwände 56 in die Tasche 20 eingraben können. Außerdem werden durch das Eingraben der Zähne 68 in die Tasche 20 im Bereich der inneren Seitenwände 56 im Wesentlichen keine Kräfte in einer x-Richtung auf die Tasche 20 bewirkt, was zu einer ungewollten Weitung der Tasche 20 in einer x-Richtung führen könnte.

Figur 5d zeigt die zweite Form der Sensorvorrichtung in einer Draufsicht in einem End-Zustand. Durch Spannungsrelaxation im Bereich der inneren Seitenwände 56 der Tasche 20 haben sich die Zahnspitzen 69 der Zähne 68 der Haltevorrichtung 24 in die Tasche 20 eingegraben. Die teils elastische, teils plastische Verformung im Bereich der inneren Seitenwände 56 der Tasche 20 aus den Figuren 5b und 5c ist in eine rein plastische Verformung übergegangen. In einer z-Richtung ist somit eine formschlüssige Verbindung entstanden. Ein Herausziehen der Haltevorrichtung 24 aus der Tasche 20 ist somit nur noch unter Zerstörung der Tasche 20 möglich. Eine Zerstörung der Tasche 20 geht mit einem Abrieb von Spänen der Tasche 20 durch die Zähne 68 der Haltevorrichtung 24 einher. Des Weiteren ist ein Ausschnitt 46 gezeigt.

Figur 5e zeigt die zweite Form der Sensorvorrichtung in dem Ausschnitt 46. Die Zahnspitzen 69 befinden sich innerhalb der Tasche 20 und stellen damit eine formschlüssige Verbindung in einer z-Richtung zwischen der Haltevorrichtung 24 und der Tasche 20 her.

In einer andern Form der Sensorvorrichtung kann auch die Tasche 20 mit Zähnen ausgeführt sein. Die Zähne graben sich in diesem Fall in die Haltevorrichtung 24 und führen in gleicher Weise zu einer formschlüssigen Verbindung.

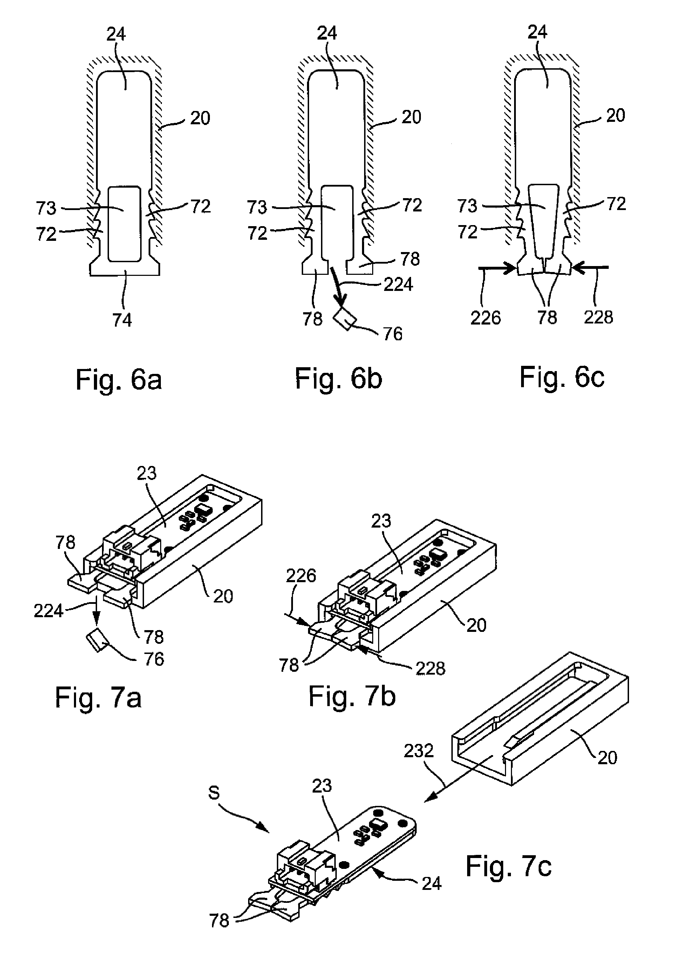

Figuren 6a bis 6c zeigen eine dritte Form der Sensorvorrichtung in einer Draufsicht, wobei die Sensorvorrichtung analog zu Figuren 1a bis 1d eine Tannenbaum-Einpressverbindung umfasst.

Ähnlich der dritten Form der Sensorvorrichtung sind Zähne an der Haltevorrichtung 24 vorgesehen, die zu einer formschlüssigen Verbindung zwischen der Haltevorrichtung 24 und Tasche 20 führen.

Figur 6a zeigt die Haltevorrichtung 24 mit zwei Seitenstegen 72, wobei die Seitenstege 72 Zähne aufweisen, wobei die Zähne in einer formschlüssigen Verbindung mit der Tasche 20 stehen. Außerhalb der Tasche 20 sind die Seitenstege 72 der Haltevorrichtung 24 über einen Abschlusssteg 74 verbunden. Die Haltevorrichtung 24 begrenzt mit den Seitenstegen 72 und dem Abschlusssteg 74 einen Freiraum 73.

Figur 6b zeigt das Herausbrechen eines Teilstücks 76 des Abschlussstegs 74 gemäß eines Pfeils 224. Es entstehen damit zwei Endbereiche 78 der Haltevorrichtung 24, die sich jeweils an die zwei Seitenstege 72 anschließen.

Figur 6c zeigt ein Zusammendrücken der Endbereiche 78 der Haltevorrichtung 24 entsprechend aufeinander zulaufender Pfeile 226 und 228. Durch das Zusammendrücken der Endbereich 78 lassen sich die Zähne der Seitenstege 72 aus den Seitenwänden der Tasche 20 entfernen. Dadurch dass die Zähne der Seitenstege 72 aus der Tasche 20 entfernt werden, wird die formschlüssige Verbindung zwischen der Haltevorrichtung 24 und der Tasche 20 gelöst. Damit wird eine Bewegung entlang der Längsachse der Haltevorrichtung 24 möglich und die Haltevorrichtung 24 kann aus der Tasche 20 entfernt werden. Der Abschlusssteg 74, das herausbrechbare Teilstück 76, und die Endbereiche 78 werden gemeinsam allgemein als Entriegelungsvorrichtung bezeichnet.

Figuren 7a bis 7c zeigen die dritte Form der Sensorvorrichtung in einer Schrägprojektion. Die Haltevorrichtung 24 ist mit einer Sensorplatine 23 verbunden. Die Verbindung zwischen Haltevorrichtung 24 und Sensorplatine 23 kann beispielsweise eine Nietverbindung sein. Gemeinsam werden die Aufnahmevorrichtung 24 und die Sensorplatine 23 als Sensorelement S bezeichnet.

Figur 7a zeigt analog zu Figur 6b das Heraustrennen des Teilstücks 76 aus dem Abschlusssteg 74 und die entstehenden Endbereiche 78.

Figur 7b zeigt analog zu Figur 6c das Zusammendrücken der Endbereiche 78 der Haltevorrichtung 24 entsprechend der aufeinander zu laufenden Pfeile 226 und 228.

Figur 7c zeigt in einer Explosionsansicht die aus der Tasche 20 gemäß dem Pfeil 232 herausgezogene Haltevorrichtung 24. Die Endbereiche 78 bleiben während des Herausziehens zusammengedrückt.

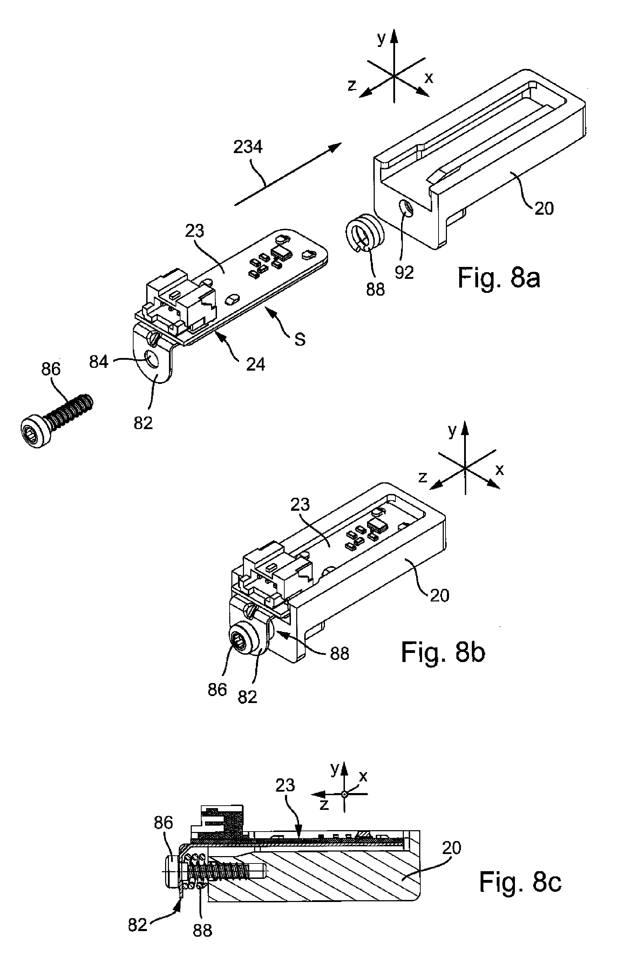

Figuren 8a, 8b und 8c zeigen eine Sensorvorrichtung eines Scheinwerfers, der nicht Gegenstand der vorliegenden Erfindung ist.

Figur 8a zeigt die einzelnen Komponenten zur Montage des Sensorelements S. Das Sensorelement S besteht aus der Haltevorrichtung 24 und der Sensorplatine 23. Das Sensorelement S wird entlang einer Richtung 234 montiert und in positiver wie negativer z-Richtung justiert. Hierzu ist eine Lasche 82 mit einem Loch 84 an der Haltevorrichtung 24 ausgebildet. Die Lasche 82 ist in ihrer Fläche orthogonal zu einer Hauptfläche der Haltevorrichtung 24 sowie orthogonal zur z-Achse. Die Aufnahmevorrichtung 20 ist mit einem Loch 92 ausgestattet, welches eine Schraube 86 aufnehmen kann.

Zu einer Montage wird die Schraube 86 durch das Loch 84 der Lasche 82 geführt, weiters durch eine Rückstellfeder 88 geführt und in das Loch 92 der Aufnahmevorrichtung 20 eingedreht. Zur Eindrehung der Schraube 86 ist das Sensorelement S bereits in die Haltevorrichtung 20 eingeführt. Die Rückstellfeder 88 dient dazu, dass die Haltevorrichtung 24 mittels der Lasche 82 gegen den Hals der Schraube 86 gedrückt wird und sich dadurch kein Spiel der Haltevorrichtung 24 in der Aufnahmevorrichtung 20 ergibt. Die Rückstellfeder 88 kann beispielsweise auch als Gummipuffer ausgebildet sein. Die Rückstellfeder 88 ist eine Druckfeder.

Die Schraube 86 ist selbstschneidend ausgeführt. Des Weiteren ist die Schraube 86 mit einer Schraubensicherung in Form einer Schicht auf dem Schraubengewinde versehen. Diese Schraubensicherung kann beispielsweise in Form von organischen Beschichtungen oder mikroverkapselten Klebstoffen vorgesehen sein. Dadurch ist auch nach mehrmaligem Ein- bzw. Ausdrehen eine fixe Position für die Schraube 86 und damit für das Sensorelement S gewährleistet. Damit kann sich eine eingestellte Justierung nicht von allein bzw. ungewollt lösen.

Figur 8b zeigt die einzelnen Komponenten der Figur 8b in montiertem Zustand in gleicher perspektivischer Darstellung. In dem montierten Zustand ist das Sensorelement S bzw. die Sensorplatine 23 entlang der z-Achse justierbar.

Figur 8c zeigt einen Schnitt durch die montierten Komponenten nach Figur 8b in einer Parallelebene zur yz-Ebene. Es ist gezeigt, wie das Schraubengewinde der Schraube 86 in die Aufnahmevorrichtung 20 eingeschraubt ist und wie der Kopf der Schraube 86 und die Druckfeder 88 die Haltevorrichtung 24 mittels der Lasche 82 fixieren. Durch die Schraube 86 ist eine Justierung in positiver, wie in negativer z-Richtung möglich.

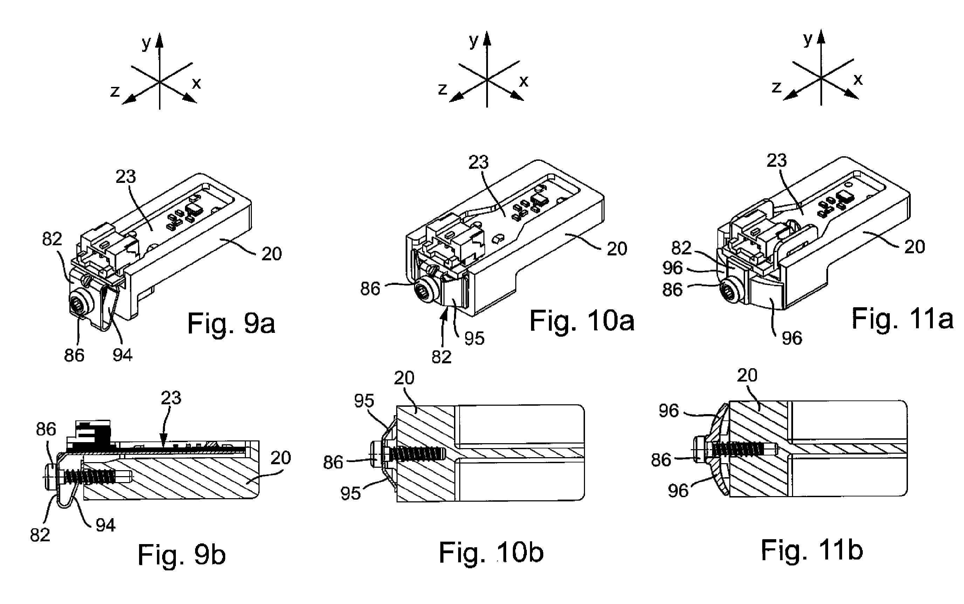

Figur 9a und 9b zeigen eine Sensorvorrichtung eines Scheinwerfers, der nicht Gegenstand der vorliegenden Erfindung ist.

Figur 9a entspricht in der Darstellungsform der Figur 8b. Als Rückstellfeder ist hierbei an der Lasche 82 eine Falz 94 ausgebildet, die in Verbindung mit der Lasche 82 die Federfunktion entsprechend der Rückstellfeder 88 nach den Figuren 8a-c übernimmt. Die Falz 94 bildet hierbei eine Blattfeder. Die Falz 94 stützt sich im Wesentlichen im Bereich eines Streifens an der Aufnahmevorrichtung 20 ab.

Figur 9b entspricht in der Darstellungsform der Figur 8c und zeigt eine Schnittdarstellung in einer Parallelebene zur yz-Ebene der Figur 9a. Es ist gezeigt, wie sich die Falz 94 an der Aufnahmevorrichtung 20 abstützt und entsprechend die mit der Falz 94 verbundene Lasche 82 gegen den Kopf der Schraube 86 drückt, womit sich eine Fixierung der Haltevorrichtung 24 in der Aufnahmevorrichtung 20 ergibt.

Figur 10a und 10b zeigen eine Sensorvorrichtung eines Scheinwerfers, der nicht Gegenstand der vorliegenden Erfindung ist.

Figur 10a entspricht in der Darstellungsform der Figur 8b. Als Rückstellfeder sind an der Lasche 82 zwei Falze 95 ausgebildet, die in Verbindung mit der Lasche 82 die Federfunktion entsprechend der Rückstellfeder 88 nach den Figuren 8a-c übernehmen. Die beiden Falze 95 bilden hierbei eine Blattfeder. Die zwei Falze 95 stützen sich im Wesentlichen im Bereich zweier jeweiliger Streifen an der Aufnahmevorrichtung 20 ab.

Figur 10b zeigt eine Schnittdarstellung in einer Parallelebene zur xz-Ebene der Figur 10a. Es ist gezeigt, wie sich die Falze 95 an der Aufnahmevorrichtung 20 abstützen und entsprechend die mit den Falzen 95 verbundene Lasche 82 gegen den Kopf der Schraube 86 drückt, womit sich eine Fixierung der Haltevorrichtung 24 in der Aufnahmevorrichtung 20 ergibt.

Figur 11a und 11b zeigen eine Sensorvorrichtung eines Scheinwerfers, der nicht Gegenstand der vorliegenden Erfindung ist.

Figur 11a entspricht in der Darstellungsform der Figur 8b. Als Rückstellfeder ist zwischen dem Kopf der Schraube 86 und der Aufnahmevorrichtung 20 ein Kunststoffteil 96 angeordnet. Das Kunststoffteil ähnelt der Funktion der Falze 95 aus den Figuren 10a und 10b und bildet eine Blattfeder.

Figur 11b zeigt eine Schnittdarstellung in einer Parallelebene zur xz-Ebene der Figur 11a. Es ist gezeigt, wie sich die Endbereiche des Kunststoffteils 96 an der Aufnahmevorrichtung 20 abstützen und entsprechend die mit dem Kunststoffteil 96 wirkverbundene Lasche 82 gegen den Kopf der Schraube 86 drückt, womit sich eine Fixierung der Haltevorrichtung 24 in der Aufnahmevorrichtung 20 ergibt.

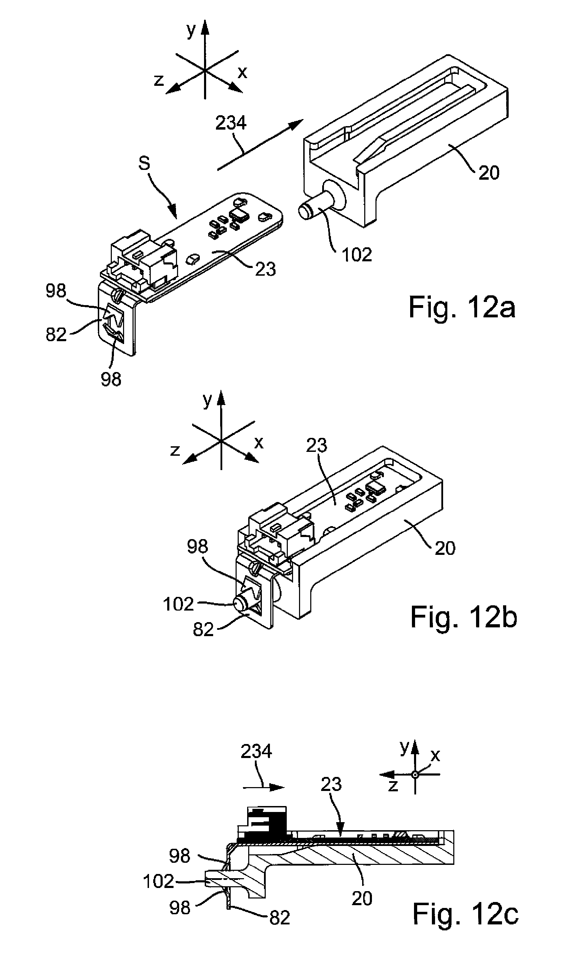

Figuren 12a bis 12c zeigen eine Sensorvorrichtung eines Scheinwerfers, der nicht Gegenstand der vorliegenden Erfindung ist.

Figur 12a zeigt die einzelnen Komponenten zur Montage des Sensorelements S. Das Sensorelement S wird entlang einer Richtung 234 montiert und in einer Parallelen zur z-Achse justiert. Hierzu ist eine Lasche 82 an der Haltevorrichtung 24 ausgebildet, wobei die Lasche 82 zwei Federlappen 98 umfasst. Die Lasche 82 ist in ihrer Fläche orthogonal zu einer Hauptfläche der Haltevorrichtung 24 sowie orthogonal zu der Pfeilachse des Pfeils 234. Die Federlappen 98 sind aus der Lasche 82 ausgestanzt. Die Federlappen 98 bilden weiters eine Öffnung in der Lasche 82. Die Aufnahmevorrichtung 20 ist mit einem Zapfen 102 ausgestattet, wobei der Zapfen 102 entgegen der Montagerichtung 234 zeigt.

Zu einer Montage wird das Sensorelement S in die Aufnahmevorrichtung 20 geführt und der Zapfen 102 schiebt sich entsprechend durch die Öffnung in der Lasche 82, die die Federlappen 98 freilassen aber begrenzen. Die Federlappen 98 beaufschlagen den Zapfen 102 nicht umlaufend radial von außen mit einer Kraft. Dies führt dazu, dass sich eine kraftschlüssige Verbindung in einer z-Richtung ergibt.

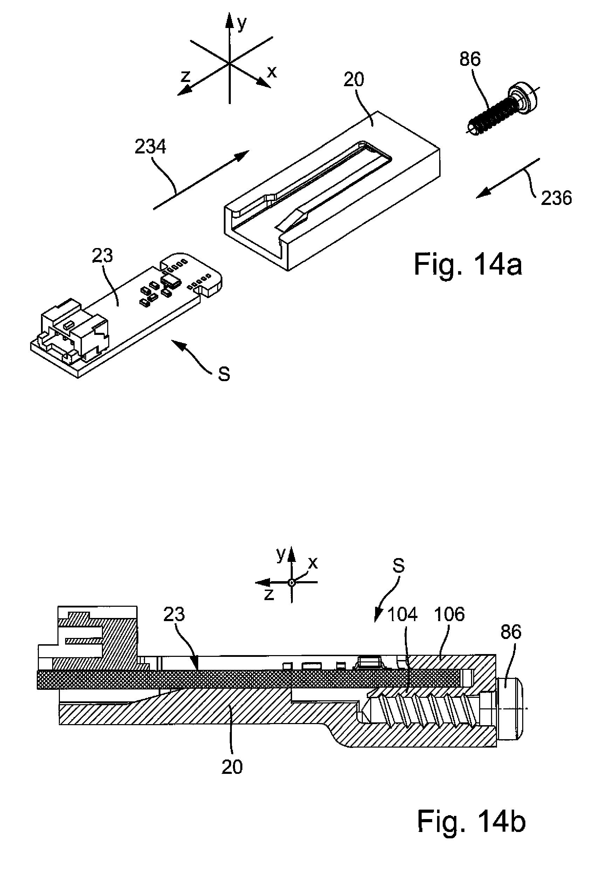

Figur 12b zeigt die einzelnen Komponenten der Figur 14b in montiertem Zustand.

Figur 12c zeigt einen Schnitt durch die montierten Komponenten nach Figur 12b in einer Parallelebene zur yz-Ebene. Es ist gezeigt, wie die Federlappen 98 an dem Zapfen 102 anliegen und die Federlappen 98 den Zapfen 102 mit Kräften beaufschlagen, was dann zu einer Fixierung des Sensorelements S in der Aufnahmevorrichtung 20 führt. Die Verbindung ist hierbei im Wesentlichen kraftschlüssig. Die Justierung ist nur in negativer z-Richtung möglich, da die Federlappen 98 schräg an dem Zapfen 102 anliegen und die Bewegung in negativer z-Richtung blockieren. Die Lasche 82 weist in Zusammenhang mit dem Zapfen 102 eine selbstsperrende Geometrie auf.

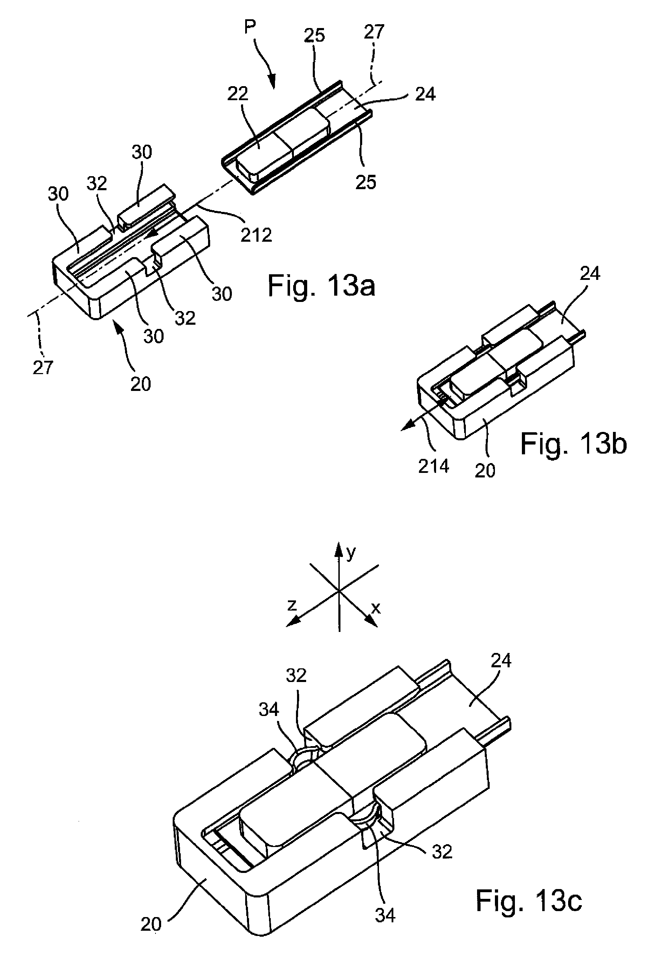

Figuren 13a bis 13c zeigen eine Sensorvorrichtung mit dem Sensorelement P und der Tasche 20 zur Aufnahme des Sensorelements P für einen Scheinwerfer, der nicht Gegenstand der vorliegenden Erfindung ist.

Figur 13a zeigt das Sensorelement P umfassend einen Dauermagneten 22 und eine Haltevorrichtung 24. Die Haltevorrichtung 24 besteht aus einem Blech und ist fest mit dem Dauermagneten 22 verbunden. Des Weiteren besitzt die Haltevorrichtung 24 ein U-förmiges Profil mit seitlichen Flanschen 25. Die Tasche 20 ist derart ausgestaltet, dass sie das Sensorelement P in einer Achse 27 aufnimmt und in der Achse 27 führt. Zu diesem Zweck ist die Tasche 20 seitlich mit Schienen 30 ausgeführt, die jeweils ein C-förmiges Profil aufweisen. Des Weiteren sind die Schienen 30 jeweils durch eine Aussparung 32 unterbrochen. Das Sensorelement P wird entsprechend einem Pfeil 212 in die Tasche 20 eingeführt.

Figur 13b zeigt den in die Tasche 20 eingeführten Positionsgeber P in dem zweiten Justage-Schritt. Gemäß einem Doppelpfeil 214 wird das Sensorelement P in der Tasche 20 justiert. Der Doppelpfeil 214 entspricht damit einem Translations-Freiheitsgrad des Sensorelements P bezüglich dem zugeordneten Bauteil, wobei es sich bei dem Bauteil um das bewegliche Bauteil oder das feststehende Bauteil handeln kann.

Figur 13c zeigt den dritten Justage-Schritt der zehnten Form der Sensorvorrichtung. Die Justage-Position, die in Figur 13b erreicht wurde, wird nun fixiert. Die Fixierung wird durch eine plastische Verformung der Flansche 25 hergestellt, wobei die plastische Verformung eine Verstemmung 34 der Flansche 25 in die Aussparung 32 der Schienen 30 hinein umfasst. Durch die Verstemmung 34 ergibt sich eine formschlüssige Verbindung zwischen der Tasche 20 und der Haltevorrichtung 24.

Eine plastische Verformung kann auch mit anderen Materialien als Blech erreicht werden. Kunststoffe sind ein Beispiel hierfür. Des Weiteren ist es möglich, dass zu verformende Material vorausgehend zu erhitzen, um damit eine leichtere Verformbarkeit zu ermöglichen. Anstatt einer Verstemmung 34 können die Haltevorrichtung 24 und die Tasche 20 verschweißt werden. Eine Verschweißung entspricht einer materialschlüssigen Verbindung. Je nach Ausführungsform können hierzu Metalle oder Kunststoffe verwendet werden.

Neben den bisher erläuterten Varianten zur Befestigung des Sensorelements P oder S kann auch durch eine Variation der Schweißtiefe eine Justage des Sensorelements P oder S durchgeführt werden.

Auch kann die Haltevorrichtung 24 der Figuren 13a bis 13c als Kunststoff und ebenso flach ausgeführt sein, um mit einer aus Kunststoff bestehenden Tasche 20 verschweißt zu werden, wodurch eine materialschlüssige Verbindung entsteht.

Die Sensorvorrichtung nach den Figuren 13a bis 13c lässt sich auch auf die Sensorvorrichtung gemäß der Figur 2a anwenden. Hierzu ist eine Haltevorrichtung, als Blechhülse ausgebildet, drehbar auf einem Zapfen gemäß der Figur 2a gelagert. Der Zapfen ist mit einer oder mehrerer Nuten ausgestattet. Durch Umformen der Haltevorrichtung wird die Haltevorrichtung bezüglich des Zapfens fixiert.

Figuren 14a und 14b zeigen eine Sensorvorrichtung eines Scheinwerfers, der nicht Gegenstand der vorliegenden Erfindung ist.

Figur 14a zeigt die einzelnen Komponenten zur Montage des Sensorelements S. Das Sensorelement S wird entlang einer Richtung 234 montiert und in positiver wie negativer z-Richtung justiert. Hierzu ist ein nicht gezeigtes Loch zur Eindrehung einer Schraube 86 vorgesehen. Die Schraube 86 wird entsprechend einer Richtung 236 in die Aufnahmeeinrichtung 20 eingebracht, um das bereits eingebrachte und justierten Sensorelement S zu fixieren. Das Sensorelement S besteht hierbei lediglich aus der Sensorplatine 23.

Figur 14b zeigt die einzelnen Komponenten der Figur 14b in montiertem Zustand in einer Schnittansicht in einer Parallelebene zur yz-Ebene. Die Sensorplatine 23, d.h. der Aufnehmer S, wurde entsprechend zu dem nicht gezeigten Positionsgeber P justiert und befindet sich innerhalb der Aufnahmevorrichtung 20. Zwischen dem Loch für die Schraube 86 und dem Bereich zur Einführung der Sensorplatine 23 weist die Aufnahmevorrichtung 20 einen Spreizlappen 104 auf. Die Schraube 86 sorgt bei Eindrehung in das vorgesehene Loch dafür, dass der Spreizlappen 104 die eingeführte Sensorplatine 23 in positiver y-Richtung mit einer Kraft beaufschlagt. Die Sensorplatine 23 drückt dementsprechend gegen eine Decke 106 der Aufnahmevorrichtung 20, wodurch die Sensorplatine 23 zwischen dem Spreizlappen 104 und der Decke 106 eingeklemmt wird und damit in der Aufnahmevorrichtung 20 fixiert wird.

## Patentansprüche

1. Scheinwerfer, insbesondere für ein Kraftfahrzeug, zum Erzeugen einer veränderbaren Lichtverteilung, wobei der Scheinwerfer mindestens ein bewegliches Bauteil (B; 12) zur Veränderung der Lichtverteilung und eine Sensorvorrichtung (2) bestehend aus zwei Sensorelementen (P, S) umfasst, wobei das erste Sensorelement (P; S) und das zweite Sensorelement (S; P) jeweils entweder dem beweglichen Bauteil (B; 12) oder einem feststehenden Bauteil (F; 14) zugeordnet sind, und wobei das bewegliche Bauteil (B; 12) einen Freiheitsgrad bezüglich des feststehenden Bauteils (F; 14) aufweist, **dadurch gekennzeichnet,**
- **dass** das erste Sensorelement (P; S) einen Freiheitsgrad bezüglich des zugeordneten beweglichen Bauteils (B; 12) oder bezüglich des zugeordneten feststehenden Bauteils (F; 14) aufweist,
- **dass** der Freiheitsgrad des beweglichen Bauteils (B; 12) und der Freiheitsgrad des ersten Sensorelements (P; S) in einem linearen Zusammenhang stehen, wonach zwei Bewegungsvektoren, die jeweils einem der Freiheitsgrade zugeordnet sind und deren Betrag jeweils ungleich Null ist, linear abhängig sind,
- **dass** eine das erste Sensorelement (P; S) haltende Haltevorrichtung (24) oder die Aufnahmevorrichtung (20) Zähne (68) aufweist, die aus einem härteren Material sind als das zur Befestigung zugeordnete Material,
- und **dass** das die Freiheitsgrade des ersten Sensorelements (P; S) bezüglich des zugeordneten beweglichen Bauteils (B; 12) oder bezüglich des feststehenden Bauteils (F; 14) auf Null reduzierbar sind, wobei sich Zahnspitzen der Zähne (68) in das weichere Material eingraben.

2. Scheinwerfer nach Anspruch 1, **dadurch gekennzeichnet, dass** das erste Sensorelement (P; S) durch eine Aufnahmevorrichtung (20; 21) aufnehmbar ist, dass das erste Sensorelement (P; S) aufgenommen durch die Aufnahmevorrichtung (20; 21) einen Freiheitsgrad besitzt, und dass alle Freiheitsgrade des ersten Sensorelements (P; S) bezüglich des zugeordneten beweglichen Bauteils (B; 12) oder feststehenden Bauteils (F; 14) auf Null reduzierbar sind.

3. Scheinwerfer nach Anspruch 1 oder 2, **dadurch gekennzeichnet, dass** die Zahnbrust (152) der Zähne (68) senkrecht zu einer Einführrichtung (204; 222) steht, und dass der Zahnrücken (154) der Zähne (68) in die Einführrichtung (204; 222) orientiert ist.

4. Scheinwerfer nach einem der Ansprüche 1 bis 3, **dadurch gekennzeichnet, dass** eine Entriegelungsvorrichtung (72, 73, 74, 76, 78) zu einer Entfernung des ersten Sensorelements (P; S) von dem zugeordneten beweglichen Bauteil (B; 12) oder von dem zugeordneten feststehenden Bauteil (F; 14) vorgesehen ist.

5. Scheinwerfer nach Anspruch 4, **dadurch gekennzeichnet, dass** die Zähne (68) einer Haltevorrichtung (24) an Stegen (72) angeordnet sind, dass ein Teilstück (76) aus einem die Stege (72) verbindenden Abschlusssteg (74) der Haltevorrichtung (24) heraustrennbar ist, und dass sich die aus dem Abschlusssteg (74) entstehenden Endbereiche (78) zusammendrücken lassen, so dass die Zähne (68) aus der Aufnahmevorrichtung (20) entfernbar sind.

6. Verfahren zur Justage eines Scheinwerfers, insbesondere eines Kraftfahrzeugs, wobei der Scheinwerfer zur Erzeugung einer veränderbaren Lichtverteilung dient, wobei der Scheinwerfer mindestens ein bewegliches Bauteil (B; 12) zur Veränderung der Lichtverteilung und eine Sensorvorrichtung bestehend aus zwei Sensorelementen (P, S) umfasst, wobei das erste Sensorelement (P; S) und das zweite Sensorelement (S; P) jeweils entweder dem beweglichen Bauteil (B; 12) oder einem feststehenden Bauteil (F; 14) zugeordnet sind, und wobei das bewegliche Bauteil (B; 12) einen Freiheitsgrad bezüglich des feststehenden Bauteils (F; 14) aufweist, **dadurch gekennzeichnet,**
- **dass** das erste Sensorelement (P; S) einen Freiheitsgrad bezüglich des zugeordneten beweglichen Bauteils (B; 12) oder bezüglich des zugeordneten feststehenden Bauteils (F; 14) aufweist,
- **dass** der Freiheitsgrad des beweglichen Bauteils (B; 12) und der Freiheitsgrad des ersten Sensorelements (P; S) in einem linearen Zusammenhang stehen, wonach zwei Bewegungsvektoren, die jeweils einem der Freiheitsgrade zugeordnet sind und deren Betrag jeweils ungleich Null ist, linear abhängig sind,
- **dass** eine das erste Sensorelement (P; S) haltende Haltevorrichtung (24) oder die Aufnahmevorrichtung (20) Zähne (68) aufweist, die aus einem härteren Material sind als das zur Befestigung zugeordnete Material,
- **dass** bei dem Verfahren in einem ersten Justage-Schritt das bewegliche Bauteil (B; 12) in eine Null-Lage bezüglich des feststehenden Bauteils (F; 14) gebracht wird,
- **dass** in einem zweiten Justage-Schritt das erste Sensorelement (P; S) bezüglich des zugeordneten beweglichen Bauteils (B; 12) oder bezüglich des zugeordneten feststehenden Bauteils (F; 14) in eine Justage-Position gebracht wird,
- **dass** in einem dritten Justage-Schritt das erste Sensorelement (P; S) bezüglich des zugeordneten beweglichen Bauteils (B; 12) oder bezüglich des zugeordneten feststehenden Bauteils (F; 14) fixiert wird, wobei sich Zahnspitzen der Zähne (68) in das weichere Material eingraben.

7. Verfahren nach dem Anspruch 6, **dadurch gekennzeichnet, dass** eines der Sensorelemente (P; S) in der Justage-Position ein Sensorsignal (4) erzeugt, und dass das Sensorsignal (4) im Wesentlichen mit einem vorbestimmten Wert (304) übereinstimmt.

8. Verfahren nach Anspruch 6 oder 7, **dadurch gekennzeichnet, dass** die Lichtverteilung in horizontaler Richtung veränderbar ist und die Null-Lage einer Ausrichtung der Lichtverteilung in Fahrtrichtung auf einer geraden Fahrbahn entspricht.

9. Verfahren nach einem der Ansprüche 6 bis 8, **dadurch gekennzeichnet, dass** das erste Sensorelement (P; S) durch Formschluss bezüglich des zugeordneten beweglichen Bauteils (B; 12) oder bezüglich des zugeordneten feststehenden Bauteils (F; 14) fixiert wird.

## Claims

1. A headlight, in particular for a motor vehicle, for generating a variable light distribution, in which the headlight includes at least one movable component (B; 12) for varying the light distribution and a sensor device (2) comprising two sensor elements (P, S), and the first sensor element (P; S) and the second sensor element (S; P) are each associated with either the movable component (B; 12) or a fixed component (F; 14), and the movable component (B; 12) has a degree of freedom relative to the fixed component (F; 14), **characterized in that**
- the first sensor element (P; S) has a degree of freedom relative to the associated movable component (B; 12) or relative to the associated fixed component (F; 14);
- that the degree of freedom of the movable component (B; 12) and the degree of freedom of the first sensor element (P; S) are in a linear relationship on which two motion vectors, which are each associated with one of the degrees of freedom and are each quantitatively other than zero, are linearly dependent;
- that either a retaining device (24) retaining the first sensor element (P; S), or the receptacle (20), has teeth (68), which are of harder material than the associated material for fastening;
- and that the degrees of freedom of the first sensor element (P; S) relative to the associated movable component (B; 12) or relative to the fixed component (F; 14) are reducible to zero, and tips of the teeth (68) dig into the softer material.

2. The headlight of claim 1, **characterized in that** the first sensor element (P; S) can be received by a receiving device (20; 21); that the first sensor element (P; S) received by the receptacle (20; 21) has a degree of freedom; and that all the degrees of freedom of the first sensor element (P; S) relative to the associated movable component (B; 12) or fixed component (F; 14) are reducible to zero.

3. The headlight of claim 1 or 2, **characterized in that** the front face (152) of the teeth (68) is perpendicularly to an insertion direction (204; 222); and that the back (154) of the teeth (68) is oriented in the insertion direction (204; 222).

4. The headlight of one of claims 1 through 3, **characterized in that** an unlocking device (72, 73, 74, 76, 78) is provided for a removal of the first sensor element (P; S) from the associated movable component (B; 12) or from the associated fixed component (F; 14).

5. The headlight of claim 4, **characterized in that** the teeth (68) of a retaining device (24) are disposed on struts (72); that a portion (76) of a closure strut (74), connecting the strut (72), of the retaining device (24) can be separated out; and that the end regions (78) occurring from the closure strut (74) are compressible, so that the teeth (68) are removable from the receptacle (20).

6. A method for adjusting a headlight, in particular of a motor vehicle, in which the headlight serves to generate a variable light distribution, and the headlight includes at least one movable component (B; 12) for varying the light distribution and a sensor device comprising two sensor elements (P, S), and the first sensor element (P; S) and the second sensor element (S; P) are each associated with either the movable component (B; 12) or a fixed component (F; 14), and the movable component (B; 12) has a degree of freedom relative to the fixed component (F; 14), **characterized in that**
- the first sensor element (P; S) has a degree of freedom relative to the associated movable component (B; 12) or relative to the associated fixed component (F; 14);
- that the degree of freedom of the movable component (B; 12) and the degree of freedom of the first sensor element (P; S) are in a linear relationship on which two motion vectors, which are each associated with one of the degrees of freedom and are each quantitatively other than zero, are linearly dependent;
- that either a retaining device (24) retaining the first sensor element (P; S), or the receptacle (20), has teeth (68), which are of harder material than the associated material for fastening;
- that in the method, in a first adjustment step, the movable component (B; 12) is put into a null position relative to the fixed component (F; 14);
- that in a second adjustment step, the first sensor element (P; S) is put into an adjustment position relative to the associated movable component (B; 12) or relative to the associated fixed component (F; 14);
- that in a third adjustment step, the first sensor element (P; S) is fixed relative to the associated movable component (B; 12) or relative to the associated fixed component (F; 14), and tooth tips of the teeth (68) dig into the softer material.

7. The method of claim 6, **characterized in that** one of the sensor elements (P; S), in the adjustment position, generates a sensor signal (4); and that the sensor signal (4) essentially matches a predetermined value (304).

8. The method of claim 6 or 7, **characterized in that** the light distribution is variable in the horizontal direction, and the null position corresponds to an orientation of the light distribution in the travel direction on a smooth road surface.

9. The method of one of claims 6 through 8, **characterized in that** the first sensor element (P; S) is fixed by positive engagement relative to the associated movable component (B; 12) or relative to the associated fixed component (F; 14).

## Revendications

1. Projecteur, notamment pour un véhicule automobile, pour produire une distribution de lumière modifiable, le projecteur comprenant au moins un composant mobile (B; 12) pour modifier la distribution de la lumière et un dispositif de détection (2) constitué de deux éléments détecteurs (P, S), le premier élément détecteur (P; S) et le deuxième élément détecteur (S; P) étant respectivement associés soit au composant mobile (B; 12), soit à un composant fixe (F; 14) et le composant mobile (B; 12) présentant un degré de liberté par rapport au composant fixe (F; 14), **caractérisé en ce**
- **que** le premier élément détecteur (P; S) présente un degré de liberté par rapport au composant mobile (B; 12) associé ou par rapport au composant fixe (F; 14) associé,
- **que** le degré de liberté du composant mobile (B; 12) et le degré de liberté du premier élément détecteur (P; S) se trouvent dans une relation linéaire selon laquelle deux vecteurs de mouvement, lesquels sont respectivement associés à l'un des degrés de liberté et dont la valeur est respectivement différente de zéro, sont dépendants linéairement,
- **qu'**un dispositif de maintien (24) qui maintient le premier élément détecteur (P; S) ou le dispositif d'accueil (20) présente des dents (68) qui sont dans un matériau plus dur que le matériau affecté à la fixation,
- et **que** les degrés de liberté du premier élément détecteur (P; S) par rapport au composant mobile (B; 12) associé ou par rapport au composant fixe (F; 14) peuvent être réduits à zéro, les pointes de dent des dents (68) s'enfonçant dans le matériau plus tendre.

2. Projecteur selon la revendication 1, **caractérisé en ce que** le premier élément détecteur (P; S) peut être accueilli par un dispositif d'accueil (20; 21), **en ce que** le premier élément détecteur (P; S) reçu par le dispositif d'accueil (20; 21) possède un degré de liberté, et **en ce que** tous les degrés de liberté du premier élément détecteur (P; S) par rapport au composant mobile (B; 12) associé ou par rapport au composant fixe (F; 14) associé peuvent être réduits à zéro.

3. Projecteur selon la revendication 1 ou 2, **caractérisé en ce que** la face d'attaque (152) des dents (68) est perpendiculaire à une direction d'introduction (204; 222), et **en ce que** le dos de dent (154) des dents (68) est orienté dans la direction d'introduction (204; 222).

4. Projecteur selon l'une des revendications 1 à 3, **caractérisé en ce qu'**il est prévu un dispositif de déverrouillage (72, 73, 74, 76, 78) pour un éloignement du premier élément détecteur (P; S) du composant mobile (B; 12) associé ou du composant fixe (F; 14) associé.

5. Projecteur selon la revendication 4, **caractérisé en ce que** les dents (68) d'un dispositif de maintien (24) sont disposées sur des nervures (72), **en ce qu'**une pièce partielle (76) peut être détachée d'une nervure de terminaison (74) du dispositif de maintien (24) qui relie les nervures (72), et **en ce que** les zones d'extrémité (78) produites par la nervure de terminaison (74) peuvent être comprimées ensemble, de sorte que les dents (68) puissent être retirées du dispositif d'accueil (20).

6. Procédé d'ajustement d'un projecteur, notamment d'un véhicule automobile, le projecteur servant à produire une distribution de lumière modifiable, le projecteur comprenant au moins un composant mobile (B; 12) pour modifier la distribution de la lumière et un dispositif de détection constitué de deux éléments détecteurs (P, S), le premier élément détecteur (P; S) et le deuxième élément détecteur (S; P) étant respectivement associés soit au composant mobile (B; 12), soit à un composant fixe (F; 14) et le composant mobile (B; 12) présentant un degré de liberté par rapport au composant fixe (F; 14), **caractérisé en ce**
- **que** le premier élément détecteur (P; S) présente un degré de liberté par rapport au composant mobile (B; 12) associé ou par rapport au composant fixe (F; 14) associé,
- **que** le degré de liberté du composant mobile (B; 12) et le degré de liberté du premier élément détecteur (P; S) se trouvent dans une relation linéaire selon laquelle deux vecteurs de mouvement, lesquels sont respectivement associés à l'un des degrés de liberté et dont la valeur est respectivement différente de zéro, sont dépendants linéairement,
- **qu'**un dispositif de maintien (24) qui maintient le premier élément détecteur (P; S) ou le dispositif d'accueil (20) présente des dents (68) qui sont dans un matériau plus dur que le matériau affecté à la fixation,
- **que** selon le procédé, dans une première étape d'ajustement, le composant mobile (B; 12) est amené dans une position zéro par rapport au composant fixe (F; 14),
- **que** dans une deuxième étape d'ajustement, le premier élément détecteur (P; S) est amené dans une position d'ajustement par rapport au composant mobile (B; 12) associé ou par rapport au composant fixe (F; 14) associé,
- **que** dans une troisième étape d'ajustement, le premier élément détecteur (P; S) est en position fixe par rapport au composant mobile (B; 12) associé ou par rapport au composant fixe (F; 14) associé, les pointes de dent des dents (68) s'enfonçant dans le matériau plus tendre.

7. Procédé selon la revendication 6, **caractérisé en ce que** l'un des éléments détecteurs (P; S) génère un signal de détecteur (4) dans la position d'ajustement, et **en ce que** le signal de détecteur (4) coïncide pour l'essentiel avec une valeur prédéfinie (304).

8. Procédé selon la revendication 6 ou 7, **caractérisé en ce que** la distribution de la lumière peut être modifiée dans le sens horizontal et la position zéro correspond à une orientation de la distribution de lumière dans le sens du déplacement sur une voie de circulation droite.

9. Procédé selon l'une des revendications 6 à 8, **caractérisé en ce que** le premier élément détecteur (P; S) est en position fixe par rapport au composant mobile (B; 12) associé ou par rapport au composant fixe (F; 14) associé par complémentarité de forme.
